(19)

Europäisches Patentamt

European Patent Office

Office européen des brevets

(11) **EP 4 530 960 A1**

(12) **EUROPEAN PATENT APPLICATION**

(43) Date of publication:
02.04.2025 Bulletin 2025/14

(21) Application number: 24182117.2

(22) Date of filing: 13.06.2024

(51) International Patent Classification (IPC):
$G06Q\ 30/08\ ^{(2012.01)}$  $G06Q\ 50/06\ ^{(2024.01)}$
$H02J\ 3/00\ ^{(2006.01)}$  $H02J\ 3/14\ ^{(2006.01)}$

(52) Cooperative Patent Classification (CPC):
H02J 3/008; G06Q 30/08; G06Q 50/06; H02J 3/144

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023 BE 202305802

(71) Applicant: THERMOVAULT BV
3600 Genk, (BE)

(72) Inventors:
• Brouyaux, Louis
3600 Genk (BE)
• Iacovella, Sandro
3600 Genk (BE)

(74) Representative: Mar.Bre S.r.l.
Via San Filippo, 2
60044 Fabriano (AN) (IT)

(54) **A METHOD OF PROVIDING FREQUENCY RESTORATION RESERVES**

(57) The present disclosure relates to a method of providing secondary frequency reserves. The method comprising the steps of building an uncertainty set by computing probabilities for the activation of thermal loads, placing energy bids by solving an optimization model, and predicting the merit order position of the aggregator in a scale of other secondary frequency reserves providers, wherein the flexibility is limited by energy constraints, wherein the aggregator is configured to estimate a volume of a bid power $P_{bid}$ to be released, and wherein the volume of a bid power $P_{bid}$ volume is based on a grid request for a total volume of power and wherein a corresponding price per power is based on a prediction of a merit order supply curve.

Fig. 3

## Description

FIELD OF THE INVENTION

Some methods are described for providing secondary frequency reserves, i.e. a reserve in the power grid that helps to keep the grid frequency.

BACKGROUND TO THE INVENTION

The methods of maximizing Automatic Frequency Restoration Reserves "aFRR" use a large number of residential electrical energy consuming loads such as household appliances. Such loads can be enabled to receive a control signal dispatched by an aggregator and respond to it by varying their power consumption within a range of flexibility.
Flexibility is considered to be a key enabler of the decarbonization of the energy systems, as it is necessary to accommodate the variability and unpredictability of renewable energy sources. Among potential flexible technologies, it is widely acknowledged that Electric storage Water Heaters (EWHs) are good candidates to provide demand response: their hot water tank constitutes an energy buffer which allows to easily shift their energy consumption [1]. In the residential sector, EWHs are massively present: in 2014, they were the primary domestic hot water source of more than 20% of households in the European Union [2]. Hence, they represent an important potential to support the power grid.
Frequency deviation, in the grid, is inversely correlated to grid balance; so controlling frequency amounts to controlling grid balance. To ensure the required grid frequency of 50 or 60 Hz the Transmission System Operators "TSOs", resort to grid balancing services which they acquire from Balancing Service Providers "BSPs". Balancing services are part of the ancillary services that TSOs acquire to control the grid. Specifically balancing services are reactive short-term means to level out frequency deviations in the power grid. A first level of grid balancing service is the Frequency Containment Reserve "FCR" providers of this service are required to intervene automatically within seconds in the entire synchronous area to restore the balance between supply and demand. The FCR, also known as primary control reserve, is the first response to frequency disturbances. If the deviation persists, the Automatic Frequency Restoration Reserves "aFRR", also known as "secondary frequency reserve" or regulation services is required to intervene.
Countries differ in their specifications but after European harmonization of the balancing markets, BSPs need to ensure that they provide the reserve within 5 minutes. As the secondary reserve, aFRR intervenes gradually after 30 seconds, the mFRR, the tertiary reserve, supports or partially substitutes the aFRR after 12.5 minutes.
A BSP which leverages the flexibility of a large number of small loads, such as residential appliances, is known as an aggregator. Participating residential appliances can be electrical thermal loads, i.e. appliances using electricity to control temperature and in particular water heaters "EWH", but in general are not limited to EWH.
An appliance aggregator receives a TSO's control signal and leverages the flexibility by dispatching an aggregator control signal, the latter is not a command rather it is a request for the appliance to change its power consumption, the appliance will vary its power only within a range allowed by its energy constraints, the energy constraints are thresholds preset to ensure security, consumer comfort and/or acceptability. The appliance is therefore an energy-constrained device, so the response to a control signal is uncertain, but it can be forecast. In this disclosure the terms appliance and devices are used interchangeably to mean an energy consuming and energy-constrained device, preferably a temperature controlling device or thermal load.
The response of the appliance can depend also on a level of severity contained in the control signal sent by the TSO. To convey the level of severity, a monetary incentive can be used, calculating and updating the monetary value that the aggregator can receive from its response is also referred to as deploying a "bidding strategy". So, the aggregator translates the control signal from the TSO in a bidding strategy aimed at , which is a commitment to temporarily modify the power consumption of the participating appliances thereby releasing or adsorbing a given value of aggregate power corresponding to a monetary value in a supply curve of flexible power amount vs monetary value. The European Regulation EU 2017/2195, directed to ensuring the optimal management and coordinated operation of the European electricity transmission system, binds the TSO to accept energy bids following a common merit order (MO) list which is a list of power flexibility resources arranged in ascending order of a cost criterion. The Merit Order MO supply curve is a curve correlating the monetary bid for power with the amount of power that can be released by all aggregators. In general, the MO supply curve is not known at the time of bidding, so a probability can be associated to the amount of power per each monetary bid. In the context of the present disclosure the expressions "other participants" and "other aggregators", refer to the other competing aFRR service providers.
The effect of the Regulation is that the energy bids are cleared only when the monetary cost per the amount of power is equal or lower than the monetary cost per power of the MO supply curve. In other words, in an energy auction, a power bid from an aFRR service provider is only cleared if the bid price per bid power $P_{bid}$ is equal or lower to the corresponding monetary value per bid power in the MO supply curve. If the bid is cleared, the amount of power bid, is the minimum between the maximum amount the TSO will pay for the bid price and the power the aggregator is capable to vary versus the business-as-usual baseline. Unless otherwise specified, in this disclosure the bid power $P_{bid}$, can be either a reduction or an increase vs the baseline, depending on the grid balance condition.

The concept of merit order MO allows to prioritize energy resources for dispatch based on their marginal costs of production. In energy markets, such as electricity markets, where supply and demand must be balanced in real-time, the merit order MO helps operators make efficient decisions about which generators to activate or deactivate to meet demand while minimizing costs.

Since the TSO prioritizes resources on their marginal cost, the quantity of energy activated per aFRR service provider is lower or equal to the quantity they committed to in the bid. From the aggregator's perspective, the quantity of activated aFRR energy depends on its position in the MO. Conceptually, the aggregator can think about its activated energy during each time period as an a priori uncertain quantity. This uncertain activation volume is associated with a probability distribution different for each possible position in the MO. This probability distribution can be skewed towards the low or the high end of the possible range of activation volumes, depending on the likelihood that the TSO activates aFRR at each MO position.

It is known to solve complex optimization problems by using uncertainty sets, uncertainty sets allow to represent a range of possible values for uncertain parameters, rather than assuming a fixed or deterministic value. In mathematical terms, an uncertainty set defines a set of possible values that a particular parameter can take.

In the description the term "prosumer" is used to indicate consumers owning or using the participating residential appliances.

In the description the term EWH is used to indicate electrical water heaters, but the concepts can be extended to any electrical appliance and, in particular, to any appliance comprising a feature of heating by electrical energy, in particular but not limited to heating water; the flexibility of appliances is limited by energy constraints such as the appliances requirements to ensure a minimum temperature and/or hot water availability.

An aggregator can leverage the flexibility of residential EWHs by coordinating a large number of appliances to provide frequency control. Automatic Frequency Restoration Reserves (aFRR), also called secondary frequency reserves or regulation services, are a good option to valorize EWHs. However, providing aFRR with EWHs entails several challenges. Firstly, it constitutes a large-scale coordination problem which can become heavy in terms of computation and communication as the number of steered appliances grows: in deploying the bidding strategy, the aggregator must maximize the probability of providing the frequency control service, while minimizing the risk of overshoot, this could cause rebound effects which could render the grid unstable. Secondly, secondary reserves are procured in competitive markets, and the activated energy volumes depend on variables such as the state of the transmission grid and the bids of other players. The aggregator needs to guarantee a high reliability of service provision, while respecting the technical energy constraints of each EWH in this uncertain environment. A bidding strategy that is able to anticipate on different scenarios of reserve provision is therefore essential.

An object of the present method is to develop a computer implemented method that allows an aggregator to provide aFRR with a cluster of electric water heaters, or more in general thermal loads, or even more in general of energy constrained appliances, in a realistic setting. The present method also aims to validate the method with a real-life pool of appliances in an simulated aFRR market to illustrate its viability and performance in practice.

The idea of controlling aggregations of thermal loads to provide ancillary services has been extensively studied in literature. Early works on the topic include [3], [4]. More recently, research has focused on the development of aggregate-and-dispatch strategies aimed at tackling the challenges related to the scale of the aggregate control problem. Aggregate and dispatch approaches are known in the context of energy systems or power grids for managing the generation and consumption of energy from various sources in an efficient and coordinated manner. These methods comprise a step of aggregating resources and step of dispatching them. In the aggregation step energy generation and consumption data from multiple sources are aggregated or collected together. These sources may include renewable energy generators (such as solar panels, wind turbines), traditional power plants, energy storage systems, and various consumers (homes, businesses, industries).

Dispatch: once the energy data is aggregated, the dispatch step involves making decisions about how to allocate or distribute the available energy resources to meet demand while considering various constraints and objectives. This typically involves optimizing the operation of different energy resources to minimize costs, maximize efficiency, or achieve other goals such as reducing carbon emissions.

In these approaches, a reduced-order representation of the cluster of appliances is used to schedule the aggregate power consumption in a computationally efficient way, typically in an optimization model. The aggregate setpoints are then tracked by switching heaters ON and OFF. Aggregate-and-dispatch strategies have for example been developed in [5], [6] for thermal loads and in [7] for electric vehicles.

Besides theoretical and simulation-based research, there are only a few works that demonstrated demand response use cases with aggregations of thermal loads in real life. A frequency control pilot with aggregated resources was carried out in 2014 [8]. The pilot showed how a cluster of heat pumps was able to follow a predefined aggregate power profile. Reference [9] describes load reduction experiments carried out with a group of heating and cooling devices in buildings. The baseline consumption, reduction potential and rebound are predicted based on historical consumption data. A comparable use case is also investigated in real life with residential heat pumps in [10]. The authors make similar predictions using detailed grey-box appliance models. Though both works predict the response of the pool to a single, specific load reduction request, they do not actively schedule the power consumption of the cluster beyond this event. So, they do not address the issue of the possible rebound effect. An algorithm for frequency services provision with a broader scope was presented in [11] and tested in real life in [12]. The authors focused on the heating, ventilation and air conditioning system of a commercial building and designed a comprehensive hierarchical Model Predictive Control (MPC) framework which covers the modeling, scheduling, and real-time control challenges of the problem, however they do not solve the problem of hedging against the uncertainty of aFRR activation volumes.

As aFRR service providers are required to intervene, an aggregator managing a pool of EWHs or more in general a pool of appliances is required to guarantee the power requested, and to achieve this while respecting the energy constraints of appliances, so a strategy for hedging against the uncertainty of aFRR activation volumes is needed.

To enable aFRR provision with energy-constrained EWHs, an optimization-based bidding strategy to hedge against the uncertainty of the aFRR activation volumes is developed, tied to a control signal dispatched by the Transmission System Operator (TSO). A known way to achieve this, is to rely on scenarios, either drawn from historical data or sampled from representative distributions. [13] proposes a bidding strategy for secondary reserves based on scenarios of the control signal. The authors of [14] consider an aggregator of prosumers and use stochastic optimization to handle uncertainties such as household consumption. Alternatively, uncertainties can also be represented as a set, leading to a robust optimization framework. In [15], [16], robust sets are used to ensure the feasibility of a frequency control strategy with thermal loads and photovoltaic inverters, respectively. A 'robust optimization' method is a computing method comprising a step of defining a range of variability for uncertain parameters and wherein in the optimization step the ranges of variability are used as optimization constraints. The range of variability for uncertain parameters in the following description is referred to as the "uncertainty set". These methods are called robust since the design of the uncertainty sets allows to consider a range of possible scenarios of desired width across which to perform the optimization.

In distributionally robust optimization "DRO" methods, the range of variability for uncertain parameters is defined under the assumptions that the unknown parameter distribution belongs to a family, or set of possible probability distributions.

The concept of forward and backward deviations will be used in the text The forward and backward deviations are descriptive statistics used to characterize statistical distributions or datasets, like the standard deviation. One of the advantages of these statistics is that they are able to capture asymmetry in the data: the forward deviation describes the spread of a random variable away from the mean in one direction, while the backward deviation describes the spread in the other direction.

It has been shown in prior art that the forward and backward deviation can be efficiently estimated from historical data samples, and that these statistics allow to compute confidence bounds for the random variable that are distributionally robust. These bounds also tend to be tighter compared to other similar alternatives.

Bidding strategies that attempt to ensure feasibility for all possible realizations of the uncertainty typically tend to produce conservative solutions. A popular alternative is to constrain the feasibility of the schedule with a high probability, resulting in a chance-constrained problem. When they are used to reformulate such probabilistic constraints, scenario-based approaches are notorious to result in heavy computations [17]. Conversely, robust approaches can be used together with properly designed uncertainty sets to guarantee constraint satisfaction with a specific confidence level without increasing the computational complexity of the problem. Several options exist to design the uncertainty set, depending on what is known about the uncertain parameters. In [18], [19], robust approaches are designed based on the full knowledge of the distribution of the uncertainties. When historical data are available, but the distribution cannot reliably be inferred, it is possible to represent the uncertainty in a distributionally robust way. This can be based, for example, on empirical statistical parameters [20] - [2 3] or Wasserstein ambiguity sets [24]. The set used in [23] is a good option to model the uncertainty of the aFRR control signal, as it has been shown to provide one of the least conservative approximations of the desired confidence level among alternatives [25], and can be constructed efficiently from historical data, [23] is a mathematical model which has never been applied to the field of managing aFRR.

In European markets, aFRR volumes are typically activated following the Merit Order (MO), as recommended by European regulation [26]. This ensures that the cheapest energy bids are utilized first, hence minimizing the cost of balancing. However, from the perspective of the aggregator, this means that the activation volumes are heavily dependent on its position in the MO. To capture this influence, the authors of [27], [28] proposed to discretize the MO position domain into levels, each associated with a different probability of activation. It is then possible to construct chance constraints based on level-specific random variables [28].

No solution is available to hedge against the uncertainty of aFRR activation volumes, minimize the risk of a rebound effect and respect the energy constraints of participating EWHs.

Existing methods designed to participate in reserves markets such as aFRR have one or several of the following issues:

- they do not properly and economically hedge against the uncertainty of activation with energy-constrained assets;
- they do not account for the impact of their position in the MO;
- they make unrealistic assumptions in terms of information availability at the time of bidding.

The present method is directed to overcoming these issues.

The aggregator's MO position is determined by its bidding price, as well as that of the other market participants. When hedging against activation uncertainty, it is therefore necessary to integrate market information in the scheduling of the aggregator. In [27], [28], this is achieved by explicitly modelling the market clearing. These works represent a battery manager as a price maker by formulating a bi-level optimization problem, which embeds the battery's profit maximization as well as this clearing. In the context of this document a battery manager is an aggregator managing a pool of appliances and a Virtual Battery Model (VBM) is a pool of appliances contributing with an amount of flexible power which can be released to the grid as a battery would release power; a charge of a virtual battery is the amount of power that at a given time the appliances in the pool can release in response to an aFRR request. An alternative to this approach was proposed in [29]. The shortcoming of these known market integration methods in the context of aFRR provision is that they assume that the bids of the other participants are readily available, which is not the case in practice.

An improved approach is to model the market with a surrogate neural network to avoid the computational challenges associated with a bi-level formulation. The shortcoming of these known market integration methods in the context of aFRR provision is that they assume that the bids of the other participants are readily available, which is not the case in practice.

Another possible improvement are computer implemented methods able to predict the behavior of the other market players. A line of research models these behaviors by constructing the Residual Demand Curve (RDC) of the strategic bidder and predicts the RDC based on historical data. The authors of [30] develop a functional prediction framework that produces a deterministic RDC forecast. In [31], historical data is leveraged to generate RDC scenarios, which are used in a stochastic optimization model that maximizes profits on a reserves market.

SUMMARY OF THE INVENTION

The present invention provides a computer implemented method configured to provide secondary frequency reserves with an aggregation of thermal loads which solves known problems and can comply with the current and future European aFRR markets. In the present disclosure the terms appliance, thermal loads, EHW will be used interchangeably. To address the challenges associated with this control problem, an aggregate-and-dispatch computer implemented method comprising a novel scheduling method is proposed, solving problems left open in the prior art on primary reserves [32] One advantage the aggregate-and-dispatch computer implemented method is that it can be used to control the power consumption of the appliances at all times (including when the aggregator is not activating aFRR) and takes their energy constraints into account thereby allowing to avoid rebound effects to take place after an aFRR activation.

Another advantage of the method is that it is aimed to maximizing the profit of the EWH aggregator by maximizing its contribution to reserve provision, An additional advantage is that it takes into account the energy constraints that account for the aFRR activation uncertainty.

Different methods exist to model uncertainty in a tractable way, in an optimization problem. This can be done via scenarios of realizations of the uncertain parameters, or via uncertainty sets derived from historical data and/or statistical information on the uncertainty. Methods comprising a step of defining uncertainty sets are robust optimization methods.

By "tractable optimization problem", the expert understands an optimization problem for which the time needed to find a solution grows in a polynomial way with the increasing number of variables, by contrast in non-tractable optimization problems the amount of time required for computing a solution can grow exponentially with the number of variables. Known examples of tractable optimization methods are: linear programming, quadratic programming, convex optimization, etc. Known non-tractable problems may require exponential time, several non-tractable optimization problems are known and are defined as NP-hard. The solution is a novel computer implemented method for an Automatic Frequency Restoration Reserves (aFRR) provider of bidding a given power in response to a TSO ancillary service energy auction for at least one power activation volume, the auction addressed to a plurality of participating providers, wherein the aFRR provider is an aggregator of a pool of appliances (Appliance Aggregator), the appliances are subject to energy or temperature constraints, and wherein the TSO will request an amount of power lower or equal to the power bid to the participating providers in ascending merit order, the method comprising the steps:

a. estimating the power activation volume requested to the Appliance Aggregator at any one or a plurality of merit order positions with a distributionally robust uncertainty set for each merit order position, and

b. calculating and bidding a value of power $P_{bid}$ for each of the at least one merit order positions that guarantees that the appliances' energy or temperature constraints are satisfied for any realization of the requested power activation volume within the at least one uncertainty set, while maximizing the sum of the product of $P_{bid}$ per a value associated to each merit order position.

For each value of power bid in response to an energy auction the Appliance Aggregator offers a price per power.

The value associated to each merit order position can be the price per power offered by the Appliance Aggregator or a value of remuneration offered by the TSO in the energy auction, as possible examples the value is an expected value, a fixed value, or a level of remuneration, in case of an expected value this can be calculated based on historical results, e.g. on past values that led to a higher revenue.

Preferably the energy and temperature constraints of the pool of appliances are described by a set of equations, known in the art as a virtual battery model.

Optionally the Appliance Aggregator can minimize the energy cost increase for a user of the appliances. Preferably the uncertainty set for the power activation by the Appliance Aggregator is described by the following set of equations:

$$\mathcal{A}_{m,\epsilon} = \{\tilde{\boldsymbol{a}}_m : \exists \boldsymbol{\beta}, \boldsymbol{\theta} \in \mathbb{R}_+^{n_k}, \tilde{\boldsymbol{a}}_m = \boldsymbol{\beta} - \boldsymbol{\theta},$$
$$\|\boldsymbol{Q}^{-1}\boldsymbol{\beta} + \boldsymbol{R}^{-1}\boldsymbol{\theta}\| \leq \sqrt{-2\ln(\epsilon)}\} \quad (6a)$$

$$\boldsymbol{Q} = \mathrm{diag}(\sigma_{f1}, ..., \sigma_{fn_k}) \quad (6b)$$

$$\boldsymbol{R} = \mathrm{diag}(\sigma_{b1}, ..., \sigma_{bn_k}) \quad (6c)$$

Uncertainty sets are known in the context of decision-making and optimization based on uncertain data. They can be described using statistical distributions, ranges of possible values, or even as sets of possible scenarios. These sets allow to cast the problem as a robust optimization model, optionally a linear robust optimization model.

In a possible implementation the uncertainty set of step a. is valid for a range of underlying statistical distributions, a property known in the literature as 'distributionally robust'., in this case a distributionally robust, probabilistic representation of the aFRR activation uncertainty is provided. This distributionally robust representation allows to ensure that energy or temperature constraints are satisfied with a specific probability level, without making assumptions on the statistical distribution of the activations. According to a possible implementation, the probabilistic representation, i.e. the uncertainty set comprises moment-based statistical parameters that can be estimated based on historical samples of a random variable and preferably forward and backward deviation metrics as moment-based statistical parameters. A preferred example of forward and backward deviation metrics cab be found in [23], [32]. According to an aspect the method comprises using uncertainty sets for different positions in the MO supply curve. As the Appliance Aggregator's bids can be in different positions within the MO supply curve, while providing the aFRR service, using uncertainty sets for different positions in the MO supply curve allows to reflect the fact that, if the Appliance Aggregator's bid is towards the end of high prices in the MO supply curve, its activation probability will generally be lower than if it is one of the market players in the lower price range of the MO supply curve. Step b of maximizing the sum of the product of $P_{bid}$ per a value associated to each merit order position, in this disclosure is also referred to as solving an optimization problem.

Following the discretization idea of [27], [28], uncertainty sets for different MO positions in the supply curve of aFRR energy auction have been computed, based on historical data from the Belgian TSO Elia [33]. However in order to apply the methods of [27] and [28] it is necessary to make assumption on the probability distribution of activated aFRR power based on the bid power, which in general is not known.

Optionally, the optimization problem is complemented with a probabilistic predictor of the position of an Appliance Aggregator bid in the Merit Order supply curve

In this case the computer implemented method for an Appliance Aggregator for bidding a given power comprises forecasting the Merit Order positions of one or more other participating providers' bids; this optional step will be referred to as "forecasting the MO supply curve". Preferably this forecasting step comprises calculating a combination of linear and/or quantile regressions and preferably uses publicly available data. The step comprises estimating the amount of power resulting from power bids placed by other participating service providers in response to auctions with lower or equal energy price, comparing the total power offered at a lower or equal energy price with the power requested in the energy auction and estimating in which MO position the Appliance Aggregator can expect to place itself based on a given bidding price in the energy auction. By estimating its position in the MO curve, the Appliance Aggregator estimates the power it can activate for the given price.

the aggregate-and-dispatch control method with novel optimization step is validated in real life under the assumption that the MO supply curve is known.

In an experimental setup a method according to this disclosure has shown improved reliability of service provision.

In an experimental setup, a method according to this disclosure has been implemented and tested in a simulated market setting. The results showed that the method was able to provide 33% more frequency reserves than a less sophisticated benchmark alternative, while having no negative impact on the reliability of the service, nor on the energy efficiency of the appliances.

The performance of the aggregate-and-dispatch control method is assessed based on the bids placed in the optimization step, the energy consumption of the individual EWHs and the reliability of service provision. To bridge the gap between the experimental setup and the commercial context, it is shown how the step of predicting the MO supply curve ) can be used together with the optimization step to place aFRR bids under the uncertainty of the market.

According to an aspect an object of the method is providing secondary frequency reserves using a flexibility of an aggregator of thermal loads.

Preferably, to ensure the scalability of the control method to a large number of appliances, the aggregate-and-dispatch CI method comprises the steps of: building a VBM, scheduling and dispatching.

The VBM is a first-order model that allows to represent a group of water heaters with a set of equations. The aggregate power and energy storage capacity of the group, as well as their collective energy losses as a function of their temperatures, are all captured by the model.

An aspect of this disclosure is a novel computer implemented method for bidding a given power $P_{bid}$ in response to a Transmission System Operator (TSO) ancillary service energy auction, the method suitable for an aggregator of a pool of appliances (Appliance Aggregator) who is a participating provider of an Automatic Frequency Restoration Reserves (aFRR), wherein the TSO sends to a plurality of participating providers an energy auction for at least one power activation volume, wherein the appliances of the pool are subject to energy and/or temperature constraints, and wherein the TSO is configured to request to the participating providers a power activation volume lower or equal to the power bid $P_{bid}$ by each participating provider following an ascending order of participating provider cost criterion, the method comprising the steps:

a. estimating the power activation volume requested to the Appliance Aggregator at any one or a plurality of merit order positions with a distributionally robust uncertainty set for each merit order position, and

b. calculating and bidding a value of power $P_{bid}$ for each of the at least one merit order positions that guarantees that the appliances energy or temperature constraints are satisfied for any realization of the requested power activation volume within the at least one uncertainty set, while maximizing the sum of the product of $P_{bid}$ per a value associated to each merit order position.

The value associated to a merit order position at the time of bidding is a price offered by the Appliance Aggregator, or an estimated market clearing price, e.g. the marginal cost of the supply curve at the requested power activation volume. The total value perceived by the Appliance Aggregator depends on the power activated by the TSO for each bid, and on the market clearing price, which may be different than the price bid, these values are not known at the time of bidding.

In general the sources of uncertainty are given by the flexibility which is limited by energy constraints, wherein the aggregator is configured to estimate a volume of a bid power "$P_{bid}$" which it will be able to be release, and wherein the volume of a bid power $P_{bid}$ volume is based on a grid request for a total volume of power and wherein a corresponding price per power is based on a prediction of a merit order supply curve. The uncertainty set describes the activation probability of thermal loads, optionally the uncertainty set is derived using historical data for different Merit Order positions. The disclosed uncertainty set has the attractive feature that it makes no assumption on the statistical distribution of the uncertain aFRR activation volumes power requested to the aFRR provider based on its MO position and it is valid for a range of underlying statistical distributions, a property known in the literature as 'distributionally robust'. Optionally a statistical distribution used to describe the probability of a given power activation by the TSO is a unimodal distribution.

The power bid by the Appliance Aggregator $P_{bid}$ is limited by energy constraints corresponding to temperature and/or energy requirements set on the thermal loads. Calculating the value of power to bid $P_{bid}$ amounts to solving an optimization problem, preferably a convex and/or linear optimization problem, by maximizing the amount of power bid $P_{bid}$, while minimizing the risk that the virtual battery model energy or temperature constraints are not met. The Appliance Aggregator can bid a volume of a bid power $P_{bid}$ for one or a plurality of MO positions, and by maximizing the amount of power bid $P_{bid}$ the value generated on the aFRR market is also maximized for one or a plurality of MO positions.

The step b is optionally complemented by a step of making a probabilistic forecast of the Merit Order position of the Appliance Aggregator in a scale of the other secondary frequency reserves providers (participating providers), estimating the price per power the TSO will pay based on the forecast of the Merit Order supply curve and maximizing the revenue. In this case in step b the total expected revenue of the one or more power bids is optimized based on the value expected for the forecast Merit Order position corresponding to each bid. So in this case the bid power per merit order level

$P_{bid,m}$ depends on the estimate of the bid position in the Merit Order curve. The Merit Order curve is made up of the bids of all participating providers and represents bid power per bid price.

A possible selection method to maximize the revenue for the Appliance Aggregator is selecting a power bid corresponding to one or more MO positions with most narrow confidence interval, and/or highest prices. These selection methods can optionally be combined e.g. by prioritizing a narrow confidence interval and selecting the highest prices for confidence intervals belonging to the same range.

The optional step of forecasting the MO supply curve is aimed at reducing the uncertainty in the optimization step.

In an embodiment the uncertainty set is a polyhedral uncertainty set defined by linear constraints. In this case the uncertainty set can comprise a step of using a $l_1 \cap l_\infty$ norm described in [37].

In some embodiments, the multiple aggregated resources are loads or appliances other than Electric Water Heaters (EWHs).

When the uncertainty set is defined as a polyhedral uncertainty set, the optimization step is a linear optimization step and comprises calculating power usage of said energy consuming resources within their performance constraints, such that both aFRR or energy management ancillary services unavailability and resources loads constraint violation are minimized.

In yet another embodiment, the optimization step is a non-linear optimization step, which uses a non-polyhedral uncertainty set to calculate the power usage of said energy consuming resources within their performance constraints, such that both aFRR or energy management ancillary services unavailability and resources loads constraint violation are minimized. This non-polyhedral uncertainty set can, for example, be a conic uncertainty set if constructed with a Euclidean norm.

In a possible embodiment, the optimization step b considers a finite number of merit orders levels .

In yet another embodiment, the optimization step b considers a static merit order position m*.

In a next embodiment, the bid power $P_{bid}$ is estimated according to energy constraints formulated as deterministic constraints according to the formulas:

P1:

$$\min \quad \sum_{k \in \mathcal{K}} (p_e \bar{P}_k \Delta t - r_k \bar{a}_{m^*,k} P_{bid,k} \Delta t) \quad (9a)$$

$$\text{s.t.} \quad \bar{P} = P_{base} - \mathrm{diag}(P_{bid})\bar{a}_{m^*} \quad (9b)$$

$$P_{base} \geq P_{min} + P_{bid} \quad (9c)$$

$$P_{base} \leq P_{max} \quad (9d)$$

$$d + DP_{base} \leq x_{max} \quad (9e)$$

$$d + D(P_{base} - P_{bid}) \geq x_{min} \quad (9f)$$

wherein $p_e$ is an electricity retail price, $r_K$ is power reserve activation remuneration, P, $P_{base}$, $P_{bid}$ are respectively a pool power, a baseline power, the bid power accordingly, $a_m$ is a normalized vector of energy activated by the aggregator, for each merit order MO position m, k is a time step index, x is power that is configured to be released within given appliances energy constraints.

$P_{min}$, $P_{max}$ and $x_{min}$, $x_{max}$ are the power and state of charge limits of the virtual battery model, respectively. d and D are respectively a vector and a matrix of parameters, both defined so that (9c) corresponds to the virtual battery model equation in discretized and vectorized form:

$$\frac{dx(t)}{dt} = -\alpha x(t) + P(t) - P_w(t)$$

where $P_w$ is the power consumed by the appliance or device and stored in form of an energy.

In another embodiment, the bid power $P_{bid}$ is estimated according to energy constraints formulated as chance constraints according to the formulas:

$$\Pr(x_k \geq x_{min,k}) \geq 1 - \epsilon \quad \forall k \in \mathcal{K} \quad (10a)$$

$$\Pr(x_k \leq x_{max,k}) \geq 1 - \epsilon \quad \forall k \in \mathcal{K} \quad (10b)$$,

wherein constraints (10a)-(10b) are equivalent to the following robust constraints:

$$\bar{\bar{x}} = d + D\bar{P} \quad (11a)$$

$$\tilde{x} = \bar{\bar{x}} - D\mathrm{diag}(P_{bid})W^{-1}\tilde{a}_{m^*} \quad (11b)$$

$$x_{min} \leq \tilde{x} \leq x_{max} \qquad \forall \tilde{a}_{m^*} \in \mathcal{A}_{m^*,\epsilon} \quad (11c)$$

wherein $\mathcal{A}_{m^*,\epsilon}$ is a polyhedral uncertainty set and wherein the constraints (11b)-(11c) are configured to be reformulated as a set of linear constraints.

In a following embodiment, the aggregator of thermal loads is able to set its price to select one or several positions in the merit order MO supply curve and corresponding probabilities of activation and the bid power $P_{bid}$ is estimated according to the formulas:

P3:

$$\min \quad \sum_{k \in \mathcal{K}}(p_e \bar{P}_k \Delta t - \sum_{m \in \mathcal{M}^*}(r_{m,k}\bar{a}_{m,k}P_{bid,m,k}\Delta t)) \quad (12a)$$

$$\text{s.t.} \quad (9c) - (9d), (11a)$$

$$\bar{P} = P_{base} - \sum_{m \in \mathcal{M}^*}\mathrm{diag}(P_{bid,m})\bar{a}_m \quad (12b)$$

$$\tilde{x} = \bar{\bar{x}} - \sum_{m \in \mathcal{M}^*}D\mathrm{diag}(P_{bid,m})W_m^{-1}\tilde{a}_m \quad (12c)$$

$$x_{min} \leq \tilde{x} \leq x_{max} \quad \forall m \in \mathcal{M}^*, \forall \tilde{a}_m \in \mathcal{A}_{m,\epsilon_m} \quad (12d)$$,

wherein $\mathcal{A}_{m^*,\epsilon}$ is a polyhedral uncertainty set.

In a further embodiment, the CII method further comprises the steps of predicting an amount of flexible power to which the other service providers of the plurality will commit for each level of price. This means predicting the MO supply curve and solving the optimization model based on the estimated merit order MO position of an energy bid, wherein each level of price bid is based on an estimated amount to which the other players will commit, i. e. the price at which other players offer the same amount of energy, wherein the amount can vary in discrete levels.

A next embodiment concerns a CII method of deploying the bidding strategy further comprising the step of building a model of the amount of flexible power consumption activation volume using data from individual energy consuming appliances using time-varying bounds to model the impact of appliances energy constraints.

BRIEF DESCRIPTION OF THE DRAWINGS

A novel computer implemented method directed to schedule the operations of clusters of thermal appliances under uncertain conditions is disclosed. This will be described with the aid of figures:

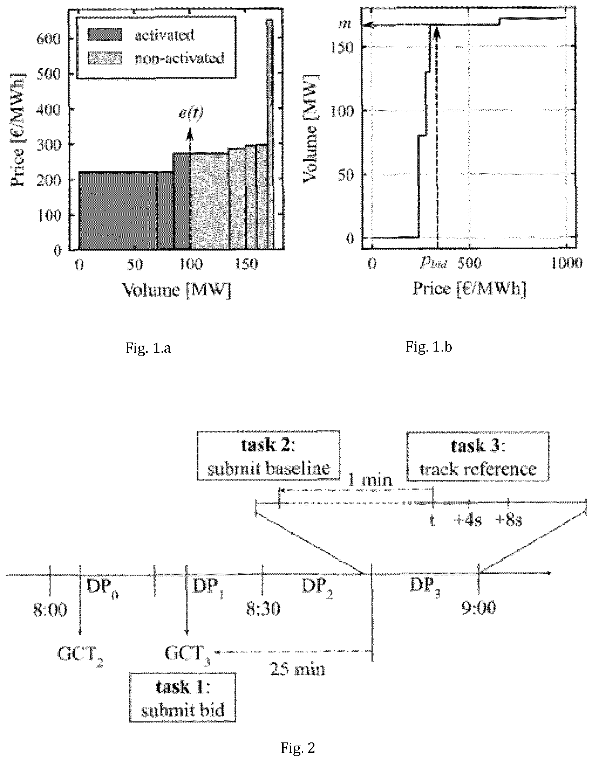

Figure 1-left shows an example of MO for the aFRR energy auction in Belgium, in particular a MO supply curve and illustration of a MO-based activation of aFRR energy;

Figure 1-right shows the same energy auction as figure 1a, with an inverted MO curve, which determines the MO position of the aggregator's bid based on its bid price;

Figure 2 shows the aFRR timings in Belgium (free bidding);

Figure 3 shows a control method according to the disclosure;

Figure 4 Top shows an example of MO prediction result for an aFRR service provider obtainable with quantile regression. Bottom: shows a possible width of the Confidence Interval, in short "CI", of the MO prediction as a function of bidding price;

Figure. 5. Shows possible cumulative normalized revenues for two embodiments P1, P2 of a control method according to the disclosure and the moments when bids were allowed;

Figure 6 shows possible energy savings across EWHs when applying a control method according to the disclosure;

Figure. 7 shows a possible result for the operations of the EWH pool using a method P3 according to a possible embodiment;

Figure 8 shows a possible aFRR activation example;

Figure. 9 shows a visualization of the difference in MO selected following a linear regression and an alternative price selection;

Figure 10 shows a simple heuristic algorithm;

Figure 11 shows a table I - experimental steps;

Figure 12 shows a reliability analysis - validation under varying merit order position.

Such figures are merely examples of effective trends.

The nomenclature of variables used in the description is the following:

$[\cdot]$ min, max minimum and maximum limits.

$[\cdot]$ Average quantity.

$a$ Normalized aFRR activation by the aggregator, uncertainty set A.

$\alpha, \beta$ Thermal model parameters.

$\Delta t$ time step duration.

$\mathbb{E}$ Expectation operator, known in literature to denote the expected value of a probabilistic variable

$e$ Instantaneous aFRR system activation.

$K, n_k$ Time step index, set $\mathbb{K}$, cardinality $n_k$.

$m$ Merit order position.

$M', n^*$ Set of selected merit order position options, cardinality $n^*$.

$n_{ewh}$, Number of electric water heaters, index $i$.

Pr Probability.

$P, P_{base}, P_{bid}$ Pool power, baseline power, bid power.

$P_{rated}$ Electric water heater rated power.

$P_w$ Equivalent power associated with domestic hot water consumption.

$p_e$ Electricity retail price.

$p_{bid}$ Bid price.

$\mathcal{P}^*$ Set of selected bid price options.

$r$ aFRR activation remuneration.

$\sigma_f, \sigma_b$ Forward and backward deviations.

$s(t)$ state value (0 for OFF and 1 for ON) of the EWH number at time t.

$T, T_a$ Temperature, ambient temperature.

$t$ time.

$v, v_k$ A vector with length $n_k$ and scalar components $v_k$.

$V$ A matrix with dimensions $(n_k, n_k)$.

$x$ State of charge of the virtual battery model (an energy value).

In Europe, secondary reserves are typically procured via two types of auctions. Capacity auctions take place one or several days ahead for time blocks of several hours and are used to ensure the availability of a predefined volume of reserves. These auctions are associated with a remuneration on the awarded capacity. Thus, capacity auctions comprise a monetary reward an amount of power and a time period of several hours, also called capacity block. Energy auctions take place closer to real time (the bid submission deadline, or Gate Closing Time (GCT) is 25 minutes before service delivery in Belgium) for time blocks of 15 minutes. These auctions are associated with a remuneration on the activated energy. A certain amount of awarded capacity comes with the obligation to bid at least that amount in all the energy auctions taking place during the capacity block. However, it is also possible to bid freely in the energy auctions without participating in the capacity auction. This is less lucrative but results in a lot more flexibility to manage the assets providing the reserve. Therefore, the present method focuses on a computer implemented method directed to calculating bids for aggregator of a pool of appliances (Appliance Aggregator) who is a participating provider of an Automatic Frequency Restoration Reserves aFRR, preferably with free energy bids.

During the Delivery Period (DP), every 4 seconds the TSO determines the aFRR volume to be activated. This volume is activated through the participants of the energy auction according to the MO supply curve. The position of the aggregator's bid in the MO supply curve is determined by its bid price and the bids of the other participants. This is illustrated in Figures 1.a and 1.b. These figures represent the merit order MO supply curve, in Figure 1.a a growing amount of power is released as the price per MWh increases. The variable e(t) indicates the amount of power released for a given price.

Reserve providers perform activations by deviating from their baseline consumption, which needs to be communicated to the TSO shortly (1 minute in Belgium) before delivery.

To validate the approach and show how it solves the problems of the prior art, a pilot study was conducted. In this pilot, a market environment was simulated so that a hypothetical aggregator could place bids at predefined MO positions (i.e. without MO uncertainty). Based on these bids, the aggregator received activation setpoints in real time.

The pilot only covered energy bids and activations associated with a decrease of the consumption compared to the baseline. This is commonly referred to as upward aFRR (aFRRup). However, this service is further referred as a aFRR. It should also be noted that the presented framework is general and can provide the service in both directions.

According to known art for an aggregator, the provision of aFRR with free bids entails 3 steps: (i) estimating its (i.e. the aggregator) bidding capacity and placing bids with a specified volume and price 25 minutes before delivery; (ii) estimating its baseline consumption and declaring this consumption 1 minute before delivery; (iii) tracking the power reference resulting from their own baseline and the activation setpoint sent by the TSO every 4 seconds. Activation setpoints in this context are the specific thresholds e.g. of frequency, voltage or power at which an ancillary service is activated or deactivated to help maintain the balance and stability of the electrical grid. This is summarized in Fig. 2.

The mathematical representation of the optimization problem, for the CII is based on the characteristics of the participating EWH as explained below.

Each EWH managed by an aggregator can be controlled to be ON or OFF. According to an implementation each EWH managed by an aggregator is equipped with a control module able to switch at least the power to the heating element ON or OFF, for example by controlling a relay; other switching means are possible. The control module also detects the power consumption and water temperature of the appliance, the detection can be by direct measurement or by receiving the information from connected devices or estimating the power consumption and water temperature. The control module is able to receive a signal from the grid. For instance, a signal from the TSO. The signal can be received directly by connecting to a cloud computing platform over the internet; any other means direct or indirect to receive the information on power request is possible. A shared control unit is able to gather EWH data such as temperature or energy or a state indicating if a set temperature or energy content is reached, from different appliances in real time and can switch them, or their heating element, ON and OFF individually. The shared control unit can be a cloud-based central entity. To make sure that the EWH temperature stays within its safety and comfort limits, the following local overrule of the shared control unit is active:

$$s_i(t) = \begin{cases} 1 \text{ if } T_i(t) \leq T_{min,i}(t) \\ 0 \text{ if } T_i(t) \geq T_{max,i}(t) \end{cases} \qquad (1)$$

Wherein $T_i(t)$ is the temperature of the EWH number i at time t,
$s_i(t)$ is state of charge of EWH number i
$T_{min,i}(t)$ is the minimum temperature constraint at a time t
$T_{max,i}(t)$ is the maximum temperature constraint at a time t

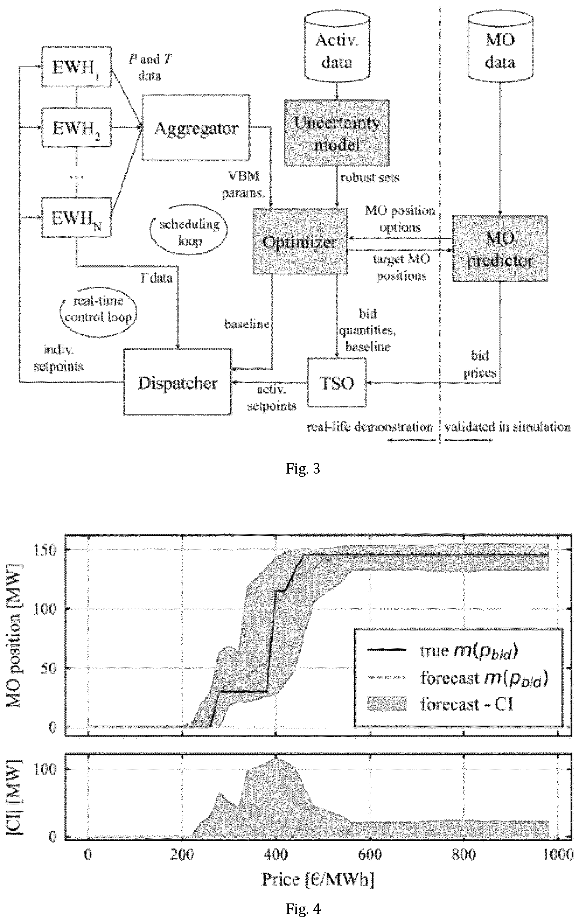

Preferably to ensure the scalability of the aFRR control method to a large number of appliances, it is possible to implement an aggregate-and-dispatch approach. The large number of appliances can comprise EWH and optionally other appliances, preferably appliances with a temperature control function, i.e. thermal loads. A possible aFRR control method is shown in Fig. 3. A method for providing aFRR services comprises three steps: building a Virtual Battery Model (VBM) which is a mathematical representation of the pool of appliances scheduling and dispatching. First, the aggregator uses individual appliance data to create a first-order Virtual Battery Model (VBM) that represents the pool of appliances. To obtain this VBM, first individual appliance units are identified based on the collected data. The identification step allows to estimate the parameters $\alpha$ and $\beta$ in the formula that describes the temperature:

$$\frac{dT_i(t)}{dt} = -\alpha_i(T_i(t) - T_{a,i}(t))$$
$$+ \beta_i s_i(t) P_{rated,i} - P_{w,i}(t) \qquad (2)$$

The VBM can then be expressed as:

$$\frac{dx(t)}{dt} = -\alpha x(t) + P(t) - P_w(t) \qquad (3a)$$

$$\alpha = \frac{1}{n_{ewh}} \sum_{i=1}^{n_{ewh}} \alpha_i \qquad (3b)$$

$$x(t=0) = \sum_{i=1}^{n_{ewh}} \frac{T_i(t=0) - T_{a,i}(t=0)}{\beta_i} \qquad (3c)$$

$$P_w(t) = \sum_{i=1}^{n_{ewh}} P_{w,i}(t) \qquad (3d)$$

$$P_{min}(t) \leq P(t) \leq P_{max}(t) \qquad (3e)$$

$$x_{min}(t) \leq x(t) \leq x_{max}(t) \qquad (3f)$$

In this model, the power and energy limits ($P_{min}$, $P_{max}$, $x_{min}$, $x_{max}$) of equations (3e)-(3f) need to be chosen so that system trajectories deemed feasible by the VBM are also feasible for the pool of appliances, without violating their individual energy constraints. Several techniques have been proposed in literature to determine these bounds. Reference [35] provides a comparison of the main existing approaches. It is possible to use the method described in [5]. Whereas the limits were constant in time in [32], in the present method the time-varying bounds, given by the energy constraints, are considered. This feature allows the method to increase the probability of meeting appliances energy constraints and preferably to ensure the constraints are met.

The VBM is known in the field of estimating flexible power delivery by a pool of devices and can be constructed based on existing literature by an expert in the field. The VBM is then fed into the scheduling step, whose goal is to optimize the operations of the pool of appliances to provide aFRR. Thanks to the fact that this optimization is done on pool level with an aggregate model, the complexity of the problem is decoupled from the number of appliances in the cluster.

An aspect of this disclosure is a method for step of bidding a given power $P_{bid}$ in response to a Transmission System Operator (TSO) ancillary service energy auction for at least one power activation volume. The step of bidding is followed by a step of scheduling wherein the Appliance Aggregator schedules controlled changes to the appliance power consumption. With reference to Figure 3, the provision of aFRR services comprises three steps, which are further detailed in the next section: a step of building an uncertainty set for aFRR activations, a step of optimization and a step of predicting the Merit Order. An aspect of this disclosure are the steps f optimization and of predicting yje Merit Order. All the three steps are represented in Figure 3 as grey boxes. The scheduling step comprises computing a power baseline and aFRR bids for the pool, while ensuring that the state of charge of the virtual battery satisfies safety and comfort constraints for each end user throughout time. The bids are used by the TSO to compute aFRR activation setpoints and send activation signals corresponding to the accepted bids to the different aggregators for the pool of appliances in real time.

Finally, the power baseline and activation setpoints computed at pool level are tracked in real time in a dispatching step. In the dispatching step, appliances, or heating elements of the appliances are switched ON and OFF, to follow the aggregate power reference accurately, while ensuring the individual energy constraints are respected. The same priority-stack-based dispatch as in [32] is adopted, which is based on the idea presented in [36]: the EWHs are ranked according to their need to consume power in the short term, which is a function of the current temperature for example the water temperature, the minimum comfort temperature and the predicted domestic heating request, for example the predicted hot water consumption. When the power needs to be modulated, EWHs with high priority are switched ON, while EWHs with low priority are switched OFF.

According to an aspect of the method, As shown in Figure 3, the scheduling method comprises two control loops: an inner real-time control loop is executed to match the resolution of the aFRR control signal, for example it is executed every 4 seconds. The outer scheduling loop is executed to match the resolution of the aFRR energy bids, for instance it is executed every 15 minutes.

Modeling the uncertainty

An aspect of the method is modeling the uncertainty, here the step of building the uncertainty set is described.

If an aFRR energy bid with power $P_{bid}$ is placed for a given quarter of hour, the resulting activated energy can be seen as a random quantity which can vary from 0 to $P_{bid}$*15 min.

As the TSO activates the energy bids according to the MO, the statistical properties of this random variable depend on the aggregator's MO position. To cope with this, it is possible to follow an approach known from [28], which proposes to model the activation separately at different MO levels. At a given MO position for a time step starting at time $t_k$, the energy activated by the aggregator can be computed as follows:

$$a_{m,k} = \frac{\int_{t_k}^{t_{k+1}} \max(0, \min(e(\tau) - m, P_{bid,k}))d\tau}{P_{bid,k}\Delta t} \qquad (4)$$

a = normalised energy activated by the aggregator for merit order m and time step k

e = represents the total power requested by the TSO that will be equal to the instantaneous aFRR system activation to which a specific price will correspond along the MO supply curve

m = power available at a merit order position of the aFRR service provider or power level request at which the aFRR service provider is activated, $m \leq e$,

$\tau$ = time

In the context of this disclosure m is a position of merit order and it is also a power value, is it the total power bid by all the other participants at the current merit order or below.

m indicates one of a finite number of power levels.

An example of activation in Belgium can follow an aFRR demand from 0 to 150 MW. So, at all times, the TSO can require aFRR service providers to collectively activate a power matching the aFRR demand. The aFRR service providers are activated according to a MO supply curve as for example in Figure 1.a and 1.b; e indicates a power level needed to activate to which a specific price corresponds along the MO supply curve, m indicates an aFRR service provider position in the MO list and is expressed in terms of the corresponding power level request at which the aFRR service provider is activated. At any given time, the activated aFRR service providers are those with $m \leq e$. If, for example, e is 100 MW, the aFRR service provider will only be activated if its MO position m, determined by its bidding price, is lower than 100 MW. Otherwise, the reserve will be provided by cheaper service providers. If $m \leq e$, the service provider provides the difference between the total system requirement e and its position m, unless that difference is higher than its total power bid $P_{bid}$.

According to an aspect of the method, the step of building an uncertainty set comprises building an uncertainty set $\mathcal{A}_m$ for the vector $\boldsymbol{a}_m$ that accurately represents the activation uncertainty in a tractable optimization problem. This set is built based on statistical deviation measures, such as for example forward and backward deviations. Such a set was originally proposed in [37] and used in [23], [35] for primary reserves.

This approach was however never used for secondary reserves, which requires building the uncertainty set above described.

As guarantees on the confidence level of the set are only valid for independent variables with zero mean, the vector $\boldsymbol{a}_m$ is first transformed as follows:

$$\widetilde{\boldsymbol{a}}_m = \boldsymbol{W}(\boldsymbol{a}_m - \overline{\boldsymbol{a}}_m) \qquad (5)$$

Where W is a whitening matrix computed as the Cholesky decomposition of the inverse of the covariance matrix of $\boldsymbol{a}_m$ - $\overline{\boldsymbol{a}}_m$. An uncertainty set with confidence level $\varepsilon$ can then be defined as:

$$\mathcal{A}_{m,\epsilon} = \{\widetilde{\boldsymbol{a}}_m : \exists \boldsymbol{\beta}, \boldsymbol{\theta} \in \mathbb{R}_+^{n_k}, \widetilde{\boldsymbol{a}}_m = \boldsymbol{\beta} - \boldsymbol{\theta},$$
$$\|\boldsymbol{Q}^{-1}\boldsymbol{\beta} + \boldsymbol{R}^{-1}\boldsymbol{\theta}\| \leq \sqrt{-2\ln(\epsilon)}\} \qquad (6a)$$

$$\boldsymbol{Q} = \mathrm{diag}(\sigma_{f1}, ..., \sigma_{fn_k}) \qquad (6b)$$

$$\boldsymbol{R} = \mathrm{diag}(\sigma_{b1}, ..., \sigma_{bn_k}) \qquad (6c)$$

σ - The forward and backward deviation

diag - The diagonal matrix operator

β , θ - here in equation (6a) are Mute variables of the uncertainty sets, i.e. they are auxiliary variables introduced in robust optimization to handle uncertainty by representing the worst-case scenario within an uncertainty set without altering the nominal solution of the optimization problem. Optionally, the vector $\overline{\boldsymbol{a}}_m$ and the matrices **W, Q** and **R** can be estimated with historical data. Several norm definitions can be considered in (6a), resulting in different approximation of the confidence level and complexity of the set. Whereas the Euclidean norm is used in [23], [35], preferably the $l_1 \cap l_\infty$ norm is used in the present invention. Alternatives to this particular norm could be used. This norm is theoretically known from [37], but it has never been used in the context of whitening an uncertainty set for aFRR activation and it has never been used for applications to solving technical problems, it is defined as:

$$\|\boldsymbol{v}\|_{1 \cap \infty} = \max\left(\frac{1}{\sqrt{n_k}}\|\boldsymbol{v}\|_1, \|\boldsymbol{v}\|_\infty\right) \qquad (7)$$

Although this norm can cause the uncertainty estimation to be more conservative, it allows to define $\mathcal{A}_{m,\epsilon}$ as a polyhedral set, resulting in linear constraints in the optimization problems.

Following the step of modeling the uncertainty is the step of solving the optimization problem.

The goal of the optimization step is to maximize the aggregator's profits from the aFRR service under uncertain activation, taking into account the cost of consuming electricity for the EWH owner. Although the bids and baseline decisions need to be taken only periodically, for example each 25 minutes and with some advance notice, for example 1 minute in advance, respectively, it is important that the optimizer is aware of their impact on the operations of the pool in the following hours. According to a possible implementation, the method can have a horizon of 24 hours and a time step of 15 minutes. In its most general form, this problem can be written as follows:

$$\min \quad \mathbb{E}\left[\sum_{k \in \mathcal{K}} (p_e P_k \Delta t - r_k a_k P_{bid,k} \Delta t)\right] \qquad (8a)$$

$$\text{s.t.} \quad \boldsymbol{P} = \boldsymbol{P}_{base} - \mathrm{diag}(\boldsymbol{P}_{bid})\boldsymbol{a} \qquad (8b)$$

$$\boldsymbol{x} = \boldsymbol{d} + \boldsymbol{D}\boldsymbol{P} \qquad (8c)$$

$$\boldsymbol{P}_{min} \leq \boldsymbol{P} \leq \boldsymbol{P}_{max} \qquad (8d)$$

$$\boldsymbol{x}_{min} \leq \boldsymbol{x} \leq \boldsymbol{x}_{max} \qquad (8e)$$

r - the remuneration for the aFRR service

$p_e$ = electricity price

d = vector of thermal parameters

D = matrix of thermal parameters

$a_k$ is the activation probability at time step k

where **d** and **D** are respectively a vector and a matrix of parameters, both defined so that (8c) corresponds to (3a) describing the level of charge in the virtual battery model in discretized and vectorized form.

Different embodiments of the method are possible each comprising optimization steps with increasing complexity. For instance, problem (8) can be reformulated in at least three different ways with distinct sets of assumptions. This results in three alternative embodiments each corresponding to different hypothesis for the optimization problem, further referred to as Embodiments 1, 2 and 3 (P1, P2, P3), which are described below. In each embodiment the uncertainty set is defined following different specific assumptions.

1) *Embodiment P1*: The goal for P1 is to define a simple, deterministic problem that provides robust outputs in the field. It is assumed that the aggregator holds a static MO position $m^*$. This allows to rewrite (8a)-(8c) based on the expected (or average) activation in that position. There are also safe assumptions made to hedge against the uncertain activations: for the power limits, it is assumed that the bid power needs to be available at all times. For the energy limits, it is made sure that the cluster can withstand the theoretical minimum and maximum activations over the optimization horizon. This results in the following problem:

**P1:**

$$\min \quad \sum_{k \in \mathcal{K}} (p_e \overline{P}_k \Delta t - r_k \overline{a}_{m^*,k} P_{bid,k} \Delta t) \quad (9a)$$

$$\text{s.t.} \quad \overline{P} = P_{base} - \mathrm{diag}(P_{bid})\overline{a}_{m^*} \quad (9b)$$

$$P_{base} \geq P_{min} + P_{bid} \quad (9c)$$

$$P_{base} \leq P_{max} \quad (9d)$$

$$d + DP_{base} \leq x_{max} \quad (9e)$$

$$d + D(P_{base} - P_{bid}) \geq x_{min} \quad (9f)$$

s.t. stands for subject to
d = vector of thermal parameters
diag - the diagonal matrix operator
P1 is a known method, a problem with this method is that by forcing the solution within the given energy constraints, it can only reach an overly conservative suboptimal solution, wherein the bid power $P_{bid}$ is reduced.

2) *Embodiment P2:* In P2, a static MO position $m^*$ is also assumed, but the uncertainty is modeled with the framework developed in the section "modeling the uncertainty" in order to obtain less conservative solutions. As the instantaneous availability of the bid power still needs to be guaranteed, the only constraints that change compared to P1 are the energy limits, which are formulated as chance constraints:

**P2:**

$$\min \quad (9a)$$

$$\text{s.t.} \quad (9b) - (9d)$$

$$\Pr(x_k \geq x_{min,k}) \geq 1 - \epsilon \quad \forall k \in \mathcal{K} \quad (10a)$$

$$\Pr(x_k \leq x_{max,k}) \geq 1 - \epsilon \quad \forall k \in \mathcal{K} \quad (10b)$$

Constraints (10a)-(10b) are equivalent to the following robust constraints based on the set defined in (6a):

$$\bar{\pmb{x}} = \pmb{d} + D\bar{P} \qquad\qquad (11a)$$

$$\tilde{\pmb{x}} = \bar{\pmb{x}} - D\mathrm{diag}(\pmb{P}_{bid})W^{-1}\tilde{\pmb{a}}_{m^*} \qquad\qquad (11b)$$

$$\pmb{x}_{min} \le \tilde{\pmb{x}} \le \pmb{x}_{max} \qquad\qquad \forall \tilde{\pmb{a}}_{m^*} \in \mathcal{A}_{m^*,\epsilon} \quad (11c)$$

In this example $\mathcal{A}_{m^*,\epsilon}$ is a polyhedral uncertainty set, so constraints (11b)-(11c) can be reformulated as a set of linear constraints, resulting in a tractable optimization problem In general, in embodiment P2 the uncertainty set is not necessarily linear. In embodiment P2 there is a probability that the energy constraints are not met, however, a positive effect of modelling the uncertainty with an uncertainty set, is that this probability is constrained within a set upper bound.

3) Embodiment P3: P3 is an improvement of the optimization step, which is not merely done assuming a unique and/or a static MO position. Instead, the Appliance Aggregator is configured to estimate the Merit Order resulting from the power bids supply curve of other participating providers and in the optimization step it is able to set its price to select one or several MO positions and corresponding probabilities of activation. An example of a Merit Order supply/ curve is represented in Figures 1.b and upper chart in Figure 4, the curve is given by a remuneration that will be paid by the TSO in the x axis and an amount of activated power corresponding to the remuneration in the y axis. A position of the Appliance Aggregator is a point in a coordinate system, wherein the power activated is in the y axis and the related price per power is in the x axis. The points corresponding to bids of all participating providers make up the Merit Order supply curve. Each participant may place more than one bid and therefore may have more than one position.

In figure 4 an activated power of 100MW will be supplied by all participants who bid less or equal to 400€/MWh.

According to an aspect of the method it is disclosed a computer implemented method comprising a step of forecasting the Merit Order supply curve resulting from the power bids of one or more other participating providers bids, and in the optimization step setting prices to select one or several merit order positions and corresponding probabilities of power activation and deciding on a power to bid for each merit order $P_{bid,m}$.

In this embodiment the uncertainty model is preferably constructed based on the output of the MO prediction.

Since the amount of activated power by the TSO is not known but only estimated, it is only known that it is lower or equal to the power bid $P_{bid,m}$, the figure represents a forecast with a confidence interval ($\varepsilon_m$) for the activated power. The confidence intervals are represented in the y axis of the lower chart of Figure 4. Given a discrete set of MO position options m in the y axis, P3 can be formulated as a generalized form of P2:

**P3**:

$$\min \sum_{k\in\mathcal{K}}(p_e\bar{P}_k\Delta t - \sum_{m\in\mathcal{M}^*}(r_{m,k}\bar{a}_{m,k}P_{bid,m,k}\Delta t))(12a)$$

$$\text{s.t.} \quad (9c)-(9d), (11a)$$

$$\bar{P} = P_{base} - \sum_{m\in\mathcal{M}^*}\mathrm{diag}(P_{bid,m})\bar{a}_m \qquad\qquad (12b)$$

$$\tilde{\pmb{x}} = \bar{\pmb{x}} - \sum_{m\in\mathcal{M}^*}D\mathrm{diag}(P_{bid,m})W_m^{-1}\tilde{\pmb{a}}_m \qquad\qquad (12c)$$

$$\pmb{x}_{min} \le \tilde{\pmb{x}} \le \pmb{x}_{max} \quad \forall m \in \mathcal{M}^*, \forall \tilde{\pmb{a}}_m \in \mathcal{A}_{m,\epsilon_m}(12d)$$

$\varepsilon_m$ confidence level of merit order position $m$, expressed in terms of probability

$\forall$ for each

$\bar{x}$ stands for normalized value of x, the state of charge

$\tilde{a}_m$ stands for normalized value of $a$, activation probability at position $m$

$P_{bid,m,k}$ power bid by the Appliance Aggregator for the merit order position m and time step k

$r_{m,k}$ remuneration at merit order position m and time step k

According to an aspect of the method the Appliance Aggregator places power bids prioritizing those corresponding to higher remunerations as represented by 12a.

As the activations at different MO positions can be statistically dependent, if there is a need to guarantee an overall confidence level of $\varepsilon$, the confidence levels of the sets in (12d) should preferably be selected so that $\Sigma_{m\in M^*}\varepsilon_m = \varepsilon$ [38]. As an example, the same level $\varepsilon_m = \varepsilon/n^*$ can be selected for all sets. Where $n^*$ is a discrete number of merit order positions m.

In the embodiment P3 the Appliance Aggregator can choose between several MO position options. In practice, the position of the aggregator's bid is determined by its bidding price and the rest of the MO supply curve (see Figure 1.a). The MO supply curve is not known at the moment of bidding, so it is possible to forecast it and thus to link the bid price to its position in the market.

The MO prediction is a way to estimate the position of an energy bid reliably, but it is not strictly necessary alternative ways of estimating a position are possible such as relaying on past statistics.

A problem solved by the embodiments P2 and P3 compared to P1 is that they produce less conservative bids thanks to the uncertainty model, P3 allows to place bids at different levels in the MO curve. According to an aspect of the method the Appliance Aggregator places power bids prioritizing those corresponding to narrower confidence intervals.

From the aggregator's perspective, the decision variable is the bid price, while the (uncertain) outcome is the MO position. Therefore, a forecast is developed for the inverted MO curve $m(p_{bid})$ (Figure 1.b).

Whereas the forecast of [30] is deterministic and the model of [31] produces scenarios, the disclosed method is aimed to develop a probabilistic framework that quantifies the MO position uncertainty as a function of the price. According to an aspect of the method the optimization step comprises selecting the bid prices associated with the narrowest confidence interval in the estimation of the MO position. Embodiment P3 thus comprises a step c. of estimating the activation probability for at least one of a discrete set of activated power corresponding to a remuneration, and the optimization step b. comprises calculating a value of power $P_{bid}$ based on the remuneration in order to maximize.

In order to obtain a simple and interpretable model, the range of bidding prices is discretized in $n_p$ elements between 0 €/MWh and the market price cap (1000 €/MWh in Belgium), so that the problem can be tackled with a combination of linear and quantile regression. The target outputs for each price point are (i) a point forecast of the MO position for the linear regression and (ii) the 5th and 95th MO position quantiles for the quantile regression.

According to a possible embodiment the step c of predicting the MO supply curve comprises predicting the power bid by other participants for each bid price, in particular for a finite number of bidding prices. This forecast step can comprise a regression estimate step, which can be a linear or quantile regression or a combination of both. The linear regression will be referred to as the deterministic part, the quantile as the uncertain part. In case of quantile regression, it is preferred to estimate the 5th and 95th MO position quantiles.

According to preferred embodiments it is possible to use one of 3 types of regression inputs that are relevant for the problem and publicly available on the website of the Belgian TSO [33]:

1) inverted MO curve of the most recent aFRR energy auction available at the time of bidding, i.e. 45 minutes before the target period.
2) inverted MO curve of the aFRR energy auction 24 hours before the target period.
3) inverted MO curve of the aFRR capacity auction active during the target period.

Fig. 4 shows an example of probabilistic inverted MO curve forecast produced by the regression models. It is clear that the width of the Confidence Interval (CI) resulting from the quantile regression, referred to as CI, varies significantly along the price axis. To construct the set $M^*$ and obtain a reliable solution from P3, there should be MO positions for which predictions are as certain as possible. This means that price options should be selected where the CI is as narrow as possible.

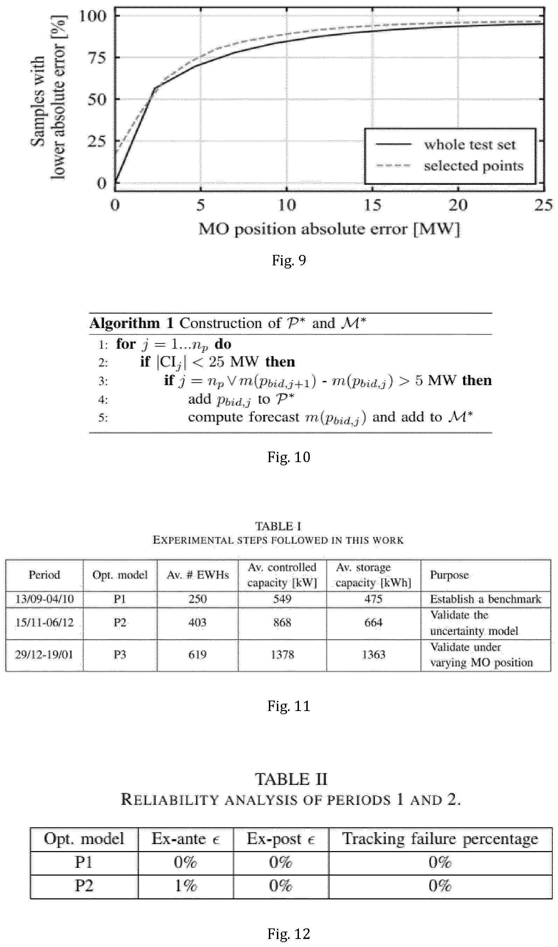

According to an aspect of the method a computer implemented method which is summarized in Algorithm 1 (fig. 10) can be used to select MO positions for which predictions are as certain as possible. In said method, $n_p$ are the price levels, $\mathcal{P}^*$ is the set of selected bid price options, M* is the corresponding set of selected merit order MO position options, cardinality n*.

A preferred method to construct the set M* comprises the steps:

- selecting prices associated with a CI width below a predefined threshold, e.g a confidence level of 25 MW;
- when several eligible prices result in a set of MO positions with a difference of less than a set value of MW, for instance less than 5 MW. selecting the highest price option.

An effect of selecting the highest price is to maximize the aggregator revenues.

It should be noted that this method of prices selection assumes that the aggregator can choose its bid prices completely freely. This is not allowed in all markets as it can lead to strategic behavior, especially in markets with low liquidity or competition. If specific market rules do not allow selecting MO prices prioritizing the highest, an alternative prices selection method might be needed.

According to a possible embodiment the appliances are EWHs in particular EWHs equipped with a control module capable to able to switch at least the power to the heating element ON or OFF, detecting the power consumption and water temperature of the appliance, is able to receive a signal from the grid as described previously in the context of the features of the appliances. The numbers of EWHs in Table I (fig. 11) represent possible results that can be obtained with a control method according to the disclosure, averaged over a control period.

According to a possible embodiment an aFRR service provider can place bids between 100 kW and 500 kW. According to a possible set up EWHs are active mostly at given daily time intervals for instance at night and/or during weekends, in this case it is preferred that the aFRR service provider aggregating appliances restricts the bidding to these time intervals of higher activity. The night can be defined as the period between 10PM and 6AM. Optionally the step of solving a linear optimization problem can include a step wherein the bidding limits are enforced with additional constraints, this reduces the risk that the bids are not compatible with appliances energy constraints.

The aFRR activation profiles hence the appliances selection process can be designed to match the long-term probability of activation at $m_* = 1$ MW. To increase the accuracy of the uncertainty set it is preferred to model the activation probability using series of historical data embracing embracing more statistically representative time periods.

With these values and using historical data from Elia, the computer implemented method has been tested.

As a result of the test it was possible to place bid at 3 different MO positions: M* = {1, 72, 140} MW. In this case, the activation profiles were coupled to the market needs in real time.

In a test set up the activations and their uncertainty were modeled with 1 year of historical data [33]. The optimization problem was solved with a rolling horizon. Rolling horizon is a known decision-making and optimization approach commonly used in dynamic and uncertain environments. It involves making decisions over a finite time horizon while updating and refining the decisions as new information becomes available. In the test set up updates were carried out every 15 minutes to make optimal use of real-time information updates, while keeping decision variables fixed where needed to respect the timings constraints set by the TSO and described above. The value for an electricity price Was pe = 0.25 €, the confidence level for the uncertainty set was ε = 10-2. These test set up means constructing an uncertainty set which contains 99% of all the activations the TSO can request, which is the risk of not meeting an energy and/or temperature constraint is 1%. which means that the uncertainty set contains 99% of all the activations the TSO can request from the Appliance Aggregator.

The use of the uncertainty set presented in the present method is further validated by comparing the results of embodiments P1 and P2 according to 3 criteria: revenue generation, energy efficiency and reliability.

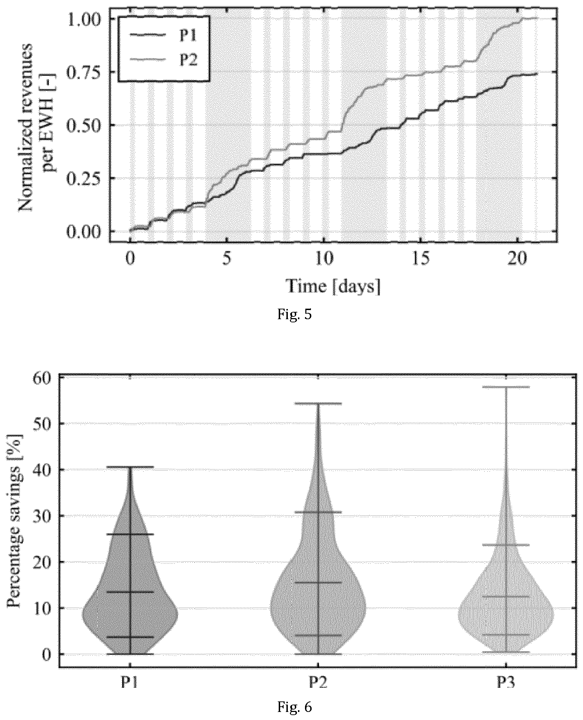

Figure.5 shows the normalized cumulative revenues per EWH over two experimental periods 13/09/2022 to 04/10/2022 for period 1 tested with the embodiment P2; 15/11/2022 to 06/12/2022 for period 2. It is clear that P2 performs better than P1: the final revenues are more than 30% higher at the end of the second period. It can also be seen that the performance difference between the two models is the largest during the longer periods in which bidding is allowed, i.e. the weekends. This behavior can be explained: as the probability to get very high (or very low) consecutive activations drops over longer time frames, the difference between the theoretical worst case and the data-driven uncertainty set increases.

To evaluate the performance of the two embodiments P1 and P2 in terms of energy efficiency, the achieved energy savings for each EWH is computed. These savings are obtained by comparing the actual EWH consumption with a model-based simulation of what the EWH would have consumed without external control. Under its default settings, an EWH is controlled thermostatically within a deadband or hysteresis close to its maximum temperature. More specifically, the EWH state is determined by (1), with $T_{min,i} = T_{max,i} - 5°C$.

The achieved savings across EWHs for all 3 periods are shown in Figure 6. Violin plots show the distribution of a given variable, estimated with a Gaussian kernel density estimator based on a dataset. The horizontal lines shown on each violin plot show, from top to bottom: maximum, 90th percentile, mean, 10th percentile, minimum. Compared to P1, P2 achieves an increase in average savings of approximately 2 percentage points. The savings variations across appliances are mostly due to their usage. An EWH with a high hot water consumption compared to its storage size needs to be maintained close to its maximum temperature all the time and has a low savings potential. On the other hand, an EWH with low hot water demand can be maintained at a much lower temperature than under its default steering and has more margin for efficiency increase.

Finally, the reliability of the control in the first and second periods is summarized in Table II (fig. 12). The ex-ante ε is the confidence level set in the optimization model. The ex-post ε is the ratio of quarter of hours during which the state of charge went out of bounds. The tracking failure percentage is the ratio of quarter of hours during which the pool could not accurately track its baseline or fulfill an activation. As expected, the conservative approach P1 resulted in no constraint violation or operational failure. Although constraint violation were tolerated in up to 1% of the cases for P2, the second test period did not exhibit any violation or failure either.

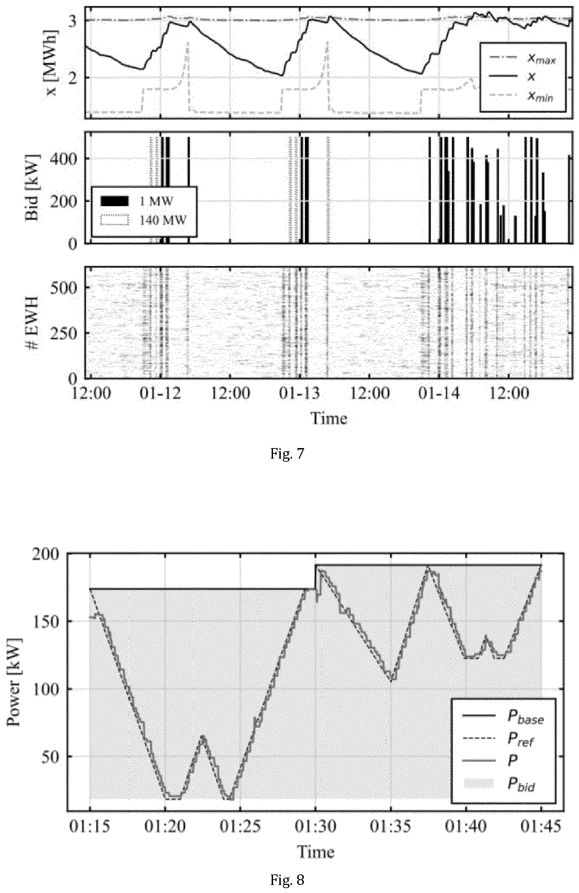

Figure 7 shows a possible result for the operations of the EWH pool using method P3 for 2 weekdays and 1 weekend day. In Figure 7 at the end of the weekday nights, the EWHs need to reach a high temperature to cover the hot water needs of the user during the following day. That is why the lower state of charge limit $x_{min}$ rises towards the end of the night. The bottom plot in Figure 7 shows the power of the individual EWHs in grayscale.

Figure 8 represents two consecutive successful aFRR activations. Based on the communicated baseline and bid, the TSO orders the EWH cluster to follow the dashed power reference in real time. In practice the TSO dispatches the aFRR orders with a control signal. The service providers / aggregators make themselves available to receive the signal by placing bids. It can be seen that a very accurate tracking is achieved, which also validates the performance of the dispatching step (common to all test periods and in general common to all embodiments).

To validate the performance of the MO prediction step step an analysis has been carried out using as input 11 months of capacity and energy MO data from January to November 2022. The input samples for every quarter of hour period within this time span were split randomly to obtain a training (75%) and test (25%) set. The training data were used to obtain a model of the energy MO and price-position. For each period of the test set, the energy MO was predicted and price-position options are generated with an algorithm as in Fig 10.

For each point forecast of the MO position in the test set, the absolute error between that forecast and the actual position value are computed. An analysis of these error samples for the whole test set gives insights into the performance of the deterministic part of the MO prediction step, i.e. the linear regression step. By comparing these samples with those of the subset of points selected by Algorithm 1 in fig 10, it is possible to evaluate whether the points with a narrow CI are effectively associated with a more accurate forecast on average.

This comparison is visualized in Figure 9. The curves show the percentage of samples with an absolute prediction error lower than the value on the horizontal axis. This is shown both for the whole test set (linear regression performance) and the subset of points selected by Algorithm 1 in Fig. 10 (price selection performance). It is clear that the probabilistic information has added value, as the curve of selected points is a few percentage points higher than the test set curve on average. The curve of selected points shows that approximately 20% of the MO position outputs of Algorithm 1 in Fig. 10, are perfect forecasts, while more than 90% of these outputs have a prediction error of less than 10 MW. As the characteristics of the uncertainty set are almost identical for MO positions within that range, this means that the assumption of MO knowledge used in the test set up is safe for the large majority of the time.

In the present disclosure the first ever real-life validation of secondary frequency reserves provision with an aggregation of thermal loads in a near-commercial setting is described. An aggregate-and-dispatch approach is proposed to steer a cluster of EWHs and there is focus on the development of a novel scheduling framework comprising three steps: a step of building an uncertainty set, a step of solving an optimization model and an optional step of predicting an MO supply curve.

The aggregate-and-dispatch approach provided scalable control for the pool while achieving highly accurate power reference tracking and proved therefore adequate to tackle the control problem. The handling of the aFRR activation uncertainty with chance constraints induced a significant performance increase compared to a fully robust approach: it resulted simultaneously in higher aFRR revenues and better energy efficiency of the EWHs, without compromising service reliability. Based on the same uncertainty set, the optimization model P3 was validated as a way to allow the aggregator to bid dynamically in the (known) MO supply curve. Finally, it is shown that it is possible to forecast the aFRR energy MO quite accurately with simple prediction methods and that accounting for probabilistic forecast information helped in selecting the most accurate price-MO position prediction pairs ex-ante.

It is demonstrated that, with the right tools, residential electric water heaters can deliver secondary frequency reserves with high performance and reliability.

References

[1] D. S. Callaway and I. A. Hiskens, "Achieving Controllability of Electric Loads," Proceedings of the IEEE, vol. 99, no. 1, pp. 184-199, jan 2011.

[2] R. Kemna, M. van Elburg, S. Aarts, and A. Corso, "Water Heaters Ecodesign and Energy Label - Preparatory Review Study - Task 2: Market Analysis," Tech. Rep., 2019.

[3] D. S. Callaway, "Tapping the energy storage potential in electric loads to deliver load following and regulation, with application to wind energy," Energy Conversion and Management, vol. 50, no. 5, pp. 1389-1400, 2009.

[4] S. Koch, J. L. Mathieu, and D. S. Callaway, "Modeling and Control of Aggregated Heterogeneous Thermostatically Controlled Loads for Ancillary Services," in 17th Power Systems Computation Conference (PSCC'11). IEEE, 2011.

[5] J. L. Mathieu, M. Kamgarpour, J. Lygeros, G. Andersson, and D. S. Callaway, "Arbitraging Intraday Wholesale Energy Market Prices With Aggregations of Thermostatic Loads," IEEE Transactions on Power Systems, vol. 30, no. 2, pp. 763-772, 2015.

[6] S. Iacovella, F. Ruelens, P. Vingerhoets, B. Claessens, and G. Deconinck, "Cluster Control of Heterogeneous Thermostatically Controlled Loads Using Tracer Devices," IEEE Transactions on Smart Grid, vol. 8, no. 2, pp. 528-536, 2017.

[7] S. Vandael, B. Claessens, M. Hommelberg, T. Holvoet, and G. Decon- inck, "A Scalable Three-Step Approach for Demand Side Management of Plug-in Hybrid Vehicles," IEEE Transactions on Smart Grid, vol. 4, no. 2, pp. 720-728, 2013.

[8] B. Biegel, P. Andersen, J. Stoustrup, M. B. Madsen, L. H. Hansen, and L. H. Rasmussen, "Aggregation and Control of Flexible Consumers - A Real Life Demonstration," in IFAC Proceedings Volumes, vol. 47, no. 3. IFAC, 2014, pp. 9950-9955.

[9] M. Wrinch, G. Dennis, T. H. M. El-fouly, and S. Wong, "Demand Response Implementation for Improved System Efficiency in Remote Communities Pilot Results from the Village of Hartley Bay," IEEE annual Electrical Power and Energy Conference (EPEC 2012), pp. 105- 110, 2012.

[10] F. M u"ller and B. Jansen, "Large-scale demonstration of precise demand response provided by residential heat pumps," Applied Energy, vol. 239, pp. 836-845, 2019.

[11] E. Vrettos, E. C. Kara, J. MacDonald, G. Andersson, and D. S. Callaway, "Experimental Demonstration of Frequency Regulation by Commercial Buildings-Part I: Modeling and Hierarchical Control Design," IEEE Transactions on Smart Grid, vol. 9, no. 4, pp. 3213-3223, 2018.

[12] --, "Experimental Demonstration of Frequency Regulation by Commercial Buildings-Part II: Results and Performance Evaluation," IEEE Transactions on Smart Grid, vol. 9, no. 4, pp. 3224-3234, 2018.

[13] F. A. Qureshi, I. Lymperopoulos, A. A. Khatir, and C. N. Jones, "Economic Advantages of Office Buildings Providing Ancillary Services with Intraday Participation," IEEE Transactions on Smart Grid, vol. 9, no. 4, pp. 3443-3452, 2018.

[14] J. Iria, F. Soares, and M. Matos, "Optimal bidding strategy for an aggregator of prosumers in energy and secondary reserve markets," Applied Energy, vol. 238, pp. 1361-1372, 2019.

[15] E. Vrettos, F. Oldewurtel, and G. Andersson, "Robust Energy- Constrained Frequency Reserves From Aggregations of Commercial Buildings," IEEE Transactions on Power Systems, vol. 31, no. 6, pp. 4272-4285, 2016.

[16] H. Almasalma and G. Deconinck, "Simultaneous Provision of Voltage and Frequency Control by PV-Battery Systems," IEEE Access, vol. 8, pp. 152 820-152 836, 2020.

[17] K. Margellos, P. Goulart, and J. Lygeros, "On the road between robust optimization and the scenario approach for chance constrained optimiza- tion problems," IEEE Transactions on Automatic Control, vol. 59, no. 8, pp. 2258-2263, 2014.

[18] L. Herre, L. Soder, and J. L. Mathieu, "The Flexibility of Thermostatically Controlled Loads as a Function of Price Notice Time," in 2018 Power Systems Computation Conference (PSCC). IEEE, 2018.

[19] E. Namor, F. Sossan, R. Cherkaoui, and M. Paolone, "Control of Battery Storage Systems for the Simultaneous Provision of Multiple Services," IEEE Transactions on Smart Grid, vol. 10, no. 3, pp. 2799-2808, 2019.

[20] M. Amini and M. Almassalkhi, "Optimal Corrective Dispatch of Uncertain Virtual Energy Storage Systems," IEEE Transactions on Smart Grid, vol. 11, no. 5, pp. 4155-4166, 2020.

[21] H. Almasalma and G. Deconinck, "Robust Policy-Based Distributed Voltage Control Provided by PV-Battery Inverters," IEEE Access, vol. 8, pp. 124 939-124 948, 2020.

[22] H. Zhang, Z. Hu, E. Munsing, S. J. Moura, and Y. Song, "Data-Driven Chance-Constrained Regulation Capacity Offering for Distributed Energy Resources," IEEE Transactions on Smart Grid, vol. 10, no. 3, pp. 2713-2725, 2019.

[23] J. Engels, B. Claessens, and G. Deconinck, "Optimal Combination of Frequency Control and Peak Shaving With Battery Storage Systems," IEEE Transactions on Smart Grid, vol. 11, no. 4, pp. 3270-3279, 2020.

[24] B. K. Poolla, A. R. Hota, S. Bolognani, D. S. Callaway, and A. Cherukuri, "Wasserstein Distributionally Robust Look-Ahead Eco- nomic Dispatch," IEEE Transactions on Power Systems, vol. 36, no. 3, pp. 2010-2022, 2021.

[25] W. Chen and M. Sim, "Goal-Driven Optimization," Operations Research, vol. 57, no. 2, pp. 342-357, 2009.

[26] The European Commission, "Commission Regulation (EU) 2017/2195 of 23 November 2017 establishing a guideline on electricity balancing," Official Journal of the European Union, pp. 312/6 - 312/53, 2017.

[27] A. Schillemans, G. De Vivero Serrano, and K. Bruninx, "Strategic Participation of Merchant Energy Storage in Joint Energy-Reserve and Balancing Markets," in Mediterranean Conference on Power Generation, Transmission, Distribution and Energy Conversion (MEDPOWER 2018). IET, 2018.

[28] J. F. Toubeau, J. Bottieau, Z. De Greve, F. Vallee, and K. Bruninx, "Data-Driven Scheduling of Energy Storage in Day-Ahead Energy and Reserve Markets with Probabilistic Guarantees on Real-Time Delivery," IEEE Transactions on Power Systems, vol. 36, no. 4, pp. 2815-2828, 2021.

[29] M. Dolanyi, K. Bruninx, J.-F. Toubeau, and E. Delarue, "Capturing Electricity Market Dynamics in Strategic Market Participation using Neural Network Constrained Optimization," IEEE Transactions on Power Systems, 2023.

[30] G. Aneiros, J. M. Vilar, R. Cao, and A. Mun o~z San Roque, "Functional prediction for the residual demand in electricity spot markets," IEEE Transactions on Power Systems, vol. 28, no. 4, pp. 4201-4208, 2013.

[31] F. A. Campos, A. Munoz San Roque, E. F. Sanchez-Ubeda, and J. Portela Gonzalez, "Strategic Bidding in Secondary Reserve Markets," IEEE Transactions on Power Systems, vol. 31, no. 4, pp. 2847-2856, 2016.

[32] L. Brouyaux, S. Iacovella, P. Olivella-Rosell, and S. Quoilin, "Chance- Constrained Frequency Containment Reserves Scheduling with Electric Water Heaters," in 2021 IEEE PES Innovative Smart Grid Technologies Europe (ISGT Europe). IEEE, 2021.

[33] Elia, "Grid data -balancing." [Online]. Available: https://www.elia.be/en/grid-data/balancing

[34] IO.Energy, "Flexity 2.0 - Enabling end-consumer to contribute in the energy transition." [Online]. Available: https://www.ioenergy.eu/flexity- 2-0/

[35] L. Brouyaux, P. Olivella-Rosell, S. Iacovella, and S. Quoilin, "Comparative analysis of aggregate battery models to characterize the flexibility of electric water heaters," in Proceedings of ECOS 2021 - The 34th International Conference on Efficiency, Cost, Optimization, Simulation and Environmental Impact of Energy Systems, 2021.

[36] H. Hao, B. M. Sanandaji, K. Poolla, and T. L. Vincent, "Aggregate Flexibility of Thermostatically Controlled Loads," IEEE Transactions on Power Systems, vol. 30, no. 1, pp. 189-198, 2015.

[37] X. Chen, M. Sim, and P. Sun, "A Robust Optimization Perspective on Stochastic Programming," Operations Research, vol. 55, no. 6, pp. 1058-1071, 2007.

[38] D. Bertsimas, V. Gupta, and N. Kallus, "Data-driven robust optimization," Mathematical Programming, vol. 167, no. 2, pp. 235-292, 2018.

**Claims**

1. Computer implemented method for bidding a given power $P_{bid}$ in response to a Transmission System Operator (TSO) ancillary service energy auction, the method suitable for an aggregator of a pool of appliances (Appliance Aggregator) who is a participating provider of an Automatic Frequency Restoration Reserves (aFRR) service, wherein the TSO sends to a plurality of participating providers an energy auction for at least one power activation volume, wherein the appliances of the pool are subject to energy and/or temperature constraints, and wherein the TSO is configured to request to the participating providers a power activation volume lower or equal to the power bid $P_{bid}$ by each participating provider following an ascending Merit Order position, which is an ascending order of participating provider cost criterion, the method comprising the steps:

   a. estimating the power activation volume requested to the Appliance Aggregator at any one or a plurality of Merit Order positions with a distributionally robust uncertainty set for each Merit Order position, and
   b. calculating and bidding a value of power $P_{bid}$ for each of the at least one Merit Order positions that guarantees that the appliances energy and/or temperature constraints are satisfied for any realization of the requested power activation volume within the at least one uncertainty set, while maximizing the sum of the product of $P_{bid}$ per a value associated to each merit Order Position.

2. A computer implemented method as in claim 1 wherein the uncertainty set of step a comprises moment-based statistical parameters that can be estimated based on historical samples of the percentage $a$ of the $P_{bid}$ that is activated by the TSO, a random variable, and preferably is based on forward and backward deviation metrics.

3. A computer implemented method as in claim 2 wherein the uncertainty set is described by the following set of equations:

$$\mathcal{A}_{m,\epsilon} = \{\tilde{a}_m : \exists \beta, \theta \in \mathbb{R}_+^{n_k}, \tilde{a}_m = \beta - \theta,$$
$$\|Q^{-1}\beta + R^{-1}\theta\| \leq \sqrt{-2\ln(\epsilon)}\} \qquad (6a)$$

$$Q = \mathrm{diag}(\sigma_{f1}, ..., \sigma_{fn_k}) \qquad (6b)$$

$$R = \mathrm{diag}(\sigma_{b1}, ..., \sigma_{bn_k}) \qquad (6c)$$

wherein Q and R are the moment-based statistical parameters, $\sigma_f$ is the forward and $\sigma_b$ is the backwards deviation metrics, $a_m$ is a percentage of the power activated versus the power bid at a Merit Order position m.

4. A computer implemented method as in claim 1, 2 or 3 wherein in step b the value associated to each Merit Order position is a remuneration offered by the TSO for the power activation provided with the aFRR service.

5. A computer implemented method as in claim 1, 2, 3 or 4 wherein the uncertainty set of step a is a 'distributionally robust' uncertainty set valid for a range of statistical distributions.

6. A computer implemented method as in any of claims 1 to 5 wherein the statistical distribution used to describe the probability of a given power activation by the TSO is a unimodal distribution.

7. A computer implemented method as in claim 1, 2, 3, 4, 5 or 6 additionally comprising a step of forecasting the Merit Order supply curve resulting from the power bids of one or more other participating providers bids, and in the step b of claim 1 the value associated to each Merit Order position is estimate of the price per power the TSO will pay based on the forecast of the Merit Order and in the maximization step the bidding prices are selected based on the associated expected Merit Order position.

8. A computer implemented method as in claim 7 wherein the maximization step comprises maximizing the sum of the product of a bid power per merit order level $P_{bid,m}$ per a revenue associated to each Merit Order position.

9. A computer implemented method as in claims 7 or 8 wherein the forecast of the Merit Order position is a probabilistic forecast and further prioritizing the power bids with narrowest confidence interval of the Merit Order position.

10. A computer implemented method as in any of claims 7 to 9 wherein the forecast step comprises a regression estimate step selected among a linear or quantile regression or a combination of both.

11. A computer implemented method as in any of claims 7 to 10 wherein the confidence intervals of the sets in (12d) are selected so that $\Sigma_{m \in M^*} \varepsilon_m = \varepsilon$.

12. A computer implemented method as in any claim from 1 to 11, wherein the step of building the uncertainty set comprise a step of using a $l1 \cap l\infty$ norm, and wherein the resulting uncertainty set is a polyhedral set uncertainty defined by linear constraints.

13. A computer implemented method as in any claim from 1 to 12, wherein the appliances are electric water heaters EWHs in particular EWHs equipped with a control module, the control module is configured to switch at least the power to the heating element ON or OFF, detect the power consumption and an internal temperature, and receive a signal from the grid.

Fig. 1.a

Fig. 1.b

Fig. 2

Fig. 3

Fig. 4

Fig. 5

Fig. 6

Fig. 7

Fig. 8

Fig. 9

---

**Algorithm 1** Construction of $\mathcal{P}^*$ and $\mathcal{M}^*$

1: **for** $j = 1...n_p$ **do**
2:    **if** $|CI_j| < 25$ MW **then**
3:       **if** $j = n_p \vee m(p_{bid,j+1}) - m(p_{bid,j}) > 5$ MW **then**
4:          add $p_{bid,j}$ to $\mathcal{P}^*$
5:          compute forecast $m(p_{bid,j})$ and add to $\mathcal{M}^*$

---

Fig. 10

TABLE I
EXPERIMENTAL STEPS FOLLOWED IN THIS WORK

| Period | Opt. model | Av. # EWHs | Av. controlled capacity [kW] | Av. storage capacity [kWh] | Purpose |
|---|---|---|---|---|---|
| 13/09-04/10 | P1 | 250 | 549 | 475 | Establish a benchmark |
| 15/11-06/12 | P2 | 403 | 868 | 664 | Validate the uncertainty model |
| 29/12-19/01 | P3 | 619 | 1378 | 1363 | Validate under varying MO position |

Fig. 11

TABLE II
RELIABILITY ANALYSIS OF PERIODS 1 AND 2.

| Opt. model | Ex-ante $\epsilon$ | Ex-post $\epsilon$ | Tracking failure percentage |
|---|---|---|---|
| P1 | 0% | 0% | 0% |
| P2 | 1% | 0% | 0% |

Fig. 12

Europäisches
Patentamt

European
Patent Office

Office européen
des brevets

# EUROPEAN SEARCH REPORT

**Application Number**

EP 24 18 2117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANGENENDT GEORG ET AL: "Evaluation of the effects of frequency restoration reserves market participation with photovoltaic battery energy storage systems and power-to-heat coupling", APPLIED ENERGY, ELSEVIER SCIENCE PUBLISHERS, GB, vol. 260, 10 December 2019 (2019-12-10), XP086045338, ISSN: 0306-2619, DOI: 10.1016/J.APENERGY.2019.114186 [retrieved on 2019-12-10] * figure 6 * * Section 2 * * Section 3.2 * | 1-13 | INV. G06Q30/08 G06Q50/06 H02J3/00 H02J3/14 |
| A | BESSA R J ET AL: "Optimization models for an EV aggregator selling secondary reserve in the electricity market", ELECTRIC POWER SYSTEMS RESEARCH, ELSEVIER, AMSTERDAM, NL, vol. 106, 7 September 2013 (2013-09-07), pages 36-50, XP028733881, ISSN: 0378-7796, DOI: 10.1016/J.EPSR.2013.08.006 * the whole document * | 1-13 | |

| | TECHNICAL FIELDS SEARCHED (IPC) |
|---|---|
| | G06Q H02J |

The present search report has been drawn up for all claims

| Place of search | Date of completion of the search | Examiner |
|---|---|---|
| Munich | 1 December 2024 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. S. CALLAWAY** ; **I. A. HISKENS**. Achieving Controllability of Electric Loads. *Proceedings of the IEEE*, January 2011, vol. 99 (1), 184-199
- **R. KEMNA** ; **M. VAN ELBURG** ; **S. AARTS** ; **A. CORSO**. Water Heaters Ecodesign and Energy Label - Preparatory Review Study - Task 2: Market Analysis. *Tech. Rep.*, 2019
- **D. S. CALLAWAY**. Tapping the energy storage potential in electric loads to deliver load following and regulation, with application to wind energy. *Energy Conversion and Management*, 2009, vol. 50 (5), 1389-1400
- Modeling and Control of Aggregated Heterogeneous Thermostatically Controlled Loads for Ancillary Services. **S. KOCH** ; **J. L. MATHIEU** ; **D. S. CALLAWAY**. 17th Power Systems Computation Conference (PSCC'11).. IEEE, 2011
- **J. L. MATHIEU** ; **M. KAMGARPOUR** ; **J. LYGEROS** ; **G. ANDERSSON** ; **D. S. CALLAWAY**. Arbitraging Intraday Wholesale Energy Market Prices With Aggregations of Thermostatic Loads. *IEEE Transactions on Power Systems*, 2015, vol. 30 (2), 763-772
- **S. IACOVELLA** ; **F. RUELENS** ; **P. VINGERHOETS** ; **B. CLAESSENS** ; **G. DECONINCK**. Cluster Control of Heterogeneous Thermostatically Controlled Loads Using Tracer Devices. *IEEE Transactions on Smart Grid*, 2017, vol. 8 (2), 528-536
- **S. VANDAEL** ; **B. CLAESSENS** ; **M. HOMMEL-BERG** ; **T. HOLVOET** ; **G. DECON- INCK**. A Scalable Three-Step Approach for Demand Side Management of Plug-in Hybrid Vehicles. *IEEE Transactions on Smart Grid*, 2013, vol. 4 (2), 720-728
- **B. BIEGEL** ; **P. ANDERSEN** ; **J. STOUSTRUP** ; **M. B. MADSEN** ; **L. H. HANSEN** ; **L. H. RASMUSSEN**. Aggregation and Control of Flexible Consumers - A Real Life Demonstration. *IFAC Proceedings Volumes*, vol. 47 (3), 9950-9955
- **M. WRINCH** ; **G. DENNIS** ; **T. H. M. EL-FOULY** ; **S. WONG**. Demand Response Implementation for Improved System Efficiency in Remote Communities Pilot Results from the Village of Hartley Bay. *IEEE annual Electrical Power and Energy Conference (EPEC 2012)*, 2012, 105-110
- **F. M U"LLER** ; **B. JANSEN**. Large-scale demonstration of precise demand response provided by residential heat pumps. *Applied Energy*, 2019, vol. 239, 836-845

- **E. VRETTOS** ; **E. C. KARA** ; **J. MACDONALD** ; **G. ANDERSSON** ; **D. S. CALLAWAY**. Experimental Demonstration of Frequency Regulation by Commercial Buildings-Part I: Modeling and Hierarchical Control Design. *IEEE Transactions on Smart Grid*, 2018, vol. 9 (4), 3213-3223
- Experimental Demonstration of Frequency Regulation by Commercial Buildings-Part II: Results and Performance Evaluation. *IEEE Transactions on Smart Grid*, 2018, vol. 9 (4), 3224-3234
- **F. A. QURESHI** ; **I. LYMPEROPOULOS** ; **A. A. KHATIR** ; **C. N. JONES**. Economic Advantages of Office Buildings Providing Ancillary Services with Intraday Participation. *IEEE Transactions on Smart Grid*, 2018, vol. 9 (4), 3443-3452
- **J. IRIA** ; **F. SOARES** ; **M. MATOS**. Optimal bidding strategy for an aggregator of prosumers in energy and secondary reserve markets. *Applied Energy*, 2019, vol. 238, 1361-1372
- **E. VRETTOS** ; **F. OLDEWURTEL** ; **G. ANDERSSON**. Robust Energy- Constrained Frequency Reserves From Aggregations of Commercial Buildings. *IEEE Transactions on Power Systems*, 2016, vol. 31 (6), 4272-4285
- **H. ALMASALMA** ; **G. DECONINCK**. Simultaneous Provision of Voltage and Frequency Control by PV-Battery Systems. *IEEE Access*, 2020, vol. 8, 152 820-152 836
- **K. MARGELLOS** ; **P. GOULART** ; **J. LYGEROS**. On the road between robust optimization and the scenario approach for chance constrained optimization problems. *IEEE Transactions on Automatic Control*, 2014, vol. 59 (8), 2258-2263
- The Flexibility of Thermostatically Controlled Loads as a Function of Price Notice Time. **L. HERRE** ; **L. SODER** ; **J. L. MATHIEU**. in 2018 Power Systems Computation Conference (PSCC).. IEEE, 2018
- **E. NAMOR** ; **F. SOSSAN** ; **R. CHERKAOUI** ; **M. PAOLONE**. Control of Battery Storage Systems for the Simultaneous Provision of Multiple Services. *IEEE Transactions on Smart Grid*, 2019, vol. 10 (3), 2799-2808
- **M. AMINI** ; **M. ALMASSALKHI**. Optimal Corrective Dispatch of Uncertain Virtual Energy Storage Systems. *IEEE Transactions on Smart Grid*, 2020, vol. 11 (5), 4155-4166

- **H. ALMASALMA** ; **G. DECONINCK**. Robust Policy-Based Distributed Voltage Control Provided by PV-Battery Inverters. *IEEE Access*, 2020, vol. 8, 124 939-124 948
- **H. ZHANG** ; **Z. HU** ; **E. MUNSING** ; **S. J. MOURA** ; **Y. SONG**. Data-Driven Chance-Constrained Regulation Capacity Offering for Distributed Energy Resources. *IEEE Transactions on Smart Grid*, 2019, vol. 10 (3), 2713-2725
- **J. ENGELS** ; **B. CLAESSENS** ; **G. DECONINCK**. Optimal Combination of Frequency Control and Peak Shaving With Battery Storage Systems. *IEEE Transactions on Smart Grid*, 2020, vol. 11 (4), 3270-3279
- **B. K. POOLLA** ; **A. R. HOTA** ; **S. BOLOGNANI** ; **D. S. CALLAWAY** ; **A. CHERUKURI**. Wasserstein Distributionally Robust Look-Ahead Eco- nomic Dispatch. *IEEE Transactions on Power Systems*, 2021, vol. 36 (3), 2010-2022
- **W. CHEN** ; **M. SIM**. Goal-Driven Optimization. *Operations Research*, 2009, vol. 57 (2), 342-357
- The European Commission, ''Commission Regulation (EU) 2017/2195 of 23 November 2017 establishing a guideline on electricity balancing. *Official Journal of the European Union*, 2017, 312, 6-312, 53
- **A. SCHILLEMANS** ; **G. DE VIVERO SERRANO** ; **K. BRUNINX**. Strategic Participation of Merchant Energy Storage in Joint Energy-Reserve and Balancing Markets. *Mediterranean Conference on Power Generation, Transmission, Distribution and Energy Conversion (MEDPOWER 2018). IET*, 2018
- **J. F. TOUBEAU** ; **J. BOTTIEAU** ; **Z. DE GREEVE** ; **F. VALLEE** ; **K. BRUNINX**. Data-Driven Scheduling of Energy Storage in Day-Ahead Energy and Reserve Markets with Probabilistic Guarantees on Real-Time Delivery. *IEEE Transactions on Power Systems*, 2021, vol. 36 (4), 2815-2828
- **M. DOLANYI** ; **K. BRUNINX** ; **J.-F. TOUBEAU** ; **E. DELARUE**. Capturing Electricity Market Dynamics in Strategic Market Participation using Neural Network Constrained Optimization. *IEEE Transactions on Power Systems*, 2023
- **G. ANEIROS** ; **J. M. VILAR** ; **R. CAO** ; **A. MUN O~Z SAN ROQUE**. Functional prediction for the residual demand in electricity spot markets. *IEEE Transactions on Power Systems*, 2013, vol. 28 (4), 4201-4208
- **F. A. CAMPOS** ; **A. MUNOZ SAN ROQUE** ; **E. F. SANCHEZ-UBEDA** ; **J. PORTELA GONZALEZ**. Strategic Bidding in Secondary Reserve Markets. *IEEE Transactions on Power Systems*, 2016, vol. 31 (4), 2847-2856
- Chance- Constrained Frequency Containment Reserves Scheduling with Electric Water Heaters. **L. BROUYAUX** ; **S. IACOVELLA** ; **P. OLIVELLA-ROSELL** ; **S. QUOILIN**. 2021 IEEE PES Innovative Smart Grid Technologies Europe (ISGT Europe).. IEEE, 2021
- **ELIA**. *Grid data -balancing.*, https://www.elia.be/en/-grid-data/balancing
- Flexity 2.0 - Enabling end-consumer to contribute in the energy transition. *IO.Energy*, https://www.ioenergy.eu/flexity- 2-0
- **L. BROUYAUX** ; **P. OLIVELLA-ROSELL** ; **S. IACOVELLA** ; **S. QUOILIN**. Comparative analysis of aggregate battery models to characterize the flexibility of electric water heaters. *Proceedings of ECOS 2021 - The 34th International Conference on Efficiency, Cost, Optimization, Simulation and Environmental Impact of Energy Systems*, 2021
- **H. HAO** ; **B. M. SANANDAJI** ; **K. POOLLA** ; **T. L. VINCENT**. Aggregate Flexibility of Thermostatically Controlled Loads. *IEEE Transactions on Power Systems*, 2015, vol. 30 (1), 189-198
- **X. CHEN** ; **M. SIM** ; **P. SUN**. A Robust Optimization Perspective on Stochastic Programming. *Operations Research*, 2007, vol. 55 (6), 1058-1071
- **D. BERTSIMAS** ; **V. GUPTA** ; **N. KALLUS**. Data-driven robust optimization. *Mathematical Programming*, 2018, vol. 167 (2), 235-292